# EUROPÄISCHE PATENTSCHRIFT

(11) **EP 3 848 530 B1**
(45) Veröffentlichungstag und Bekanntmachung des Hinweises auf die Patenterteilung: **30.07.2025**
(21) Anmeldenummer: 20216803.5
(22) Anmeldetag: 23.12.2020
(51) Int. Cl.: E04B 1/00, E04B 1/38, F16B 12/20, F16B 12/44, E04F 11/18

(54) **TRAGELEMENTKONSTRUKTION FÜR EIN BALKONGELÄNDER UND VERWENDUNG DERSELBEN**
SUPPORTING ELEMENT STRUCTURE FOR BALCONY RAILING AND ITS USE
CONSTRUCTION D'ÉLÉMENT PORTEUR POUR UNE BALUSTRADE DE BALCON ET SON UTILISATION

(30) Priorität: 08.01.2020 AT 500032020
(43) Veröffentlichungstag der Anmeldung: 14.07.2021
(73) Patentinhaber: Berghofer, Bernhard, 8200 Gleisdorf (AT)
(72) Erfinder: Berghofer, Bernhard, 8200 Gleisdorf (AT)
(74) Vertreter: Wirnsberger & Lerchbaum Patentanwälte OG

(56) Entgegenhaltungen:
- AU-A4- 2009 100 361
- AU-B2- 477 021
- AU-B2- 477 021
- US-A- 5 479 733
- US-A1- 2003 196 395
- US-A1- 2005 051 761
- US-A1- 2007 137 134
- US-A1- 2008 164 451
- US-B1- 6 481 177

## Beschreibung

Die Erfindung betrifft eine Tragelementkonstruktion für ein Balkongeländer, um mehrere Tragelemente des Balkongeländers zur Errichtung des Balkongeländers miteinander zu verbinden, wobei die Tragelementkonstruktion ein erstes Tragelement, ein zweites Tragelement und ein Koppelstück umfasst, um das erste Tragelement und das zweite Tragelement mit dem Koppelstück miteinander zu verbinden.

Des Weiteren betrifft die Erfindung eine Verwendung der Tragelementkonstruktion.

Um ein Balkongeländer zu errichten, sind verschiedene Tragelementkonstruktionen bekannt, welche in der Regel aus mehreren Tragelementen, häufig ausgeführt als Konstruktionsprofile, gebildet sind, wobei die Tragelemente üblicherweise zur Errichtung der Tragelementkonstruktion miteinander verschraubt, verschweißt oder vernietet werden. Tragelemente sind dabei häufig in Form von vertikal ausgerichteten Säulen, horizontal ausgerichteten Geländergurten, welche Säulen verbinden, Geländerstäbe, welche mehrere Geländergurte miteinander verbinden, und/oder Handläufe, welche eine obere Begrenzung des Geländers bilden, ausgeprägt, wobei diese verschiedenen Ausprägungen je nach Anwendungsfall in unterschiedlichen Konfigurationen und Beabstandungen miteinander verbunden sind, um ein Balkongeländer zu bilden.

Besondere Bedeutung ist bei einem Balkongeländer einer hohen Stabilität und Sicherheit des Aufbaus des Balkongeländers bzw. einer Tragelementkonstruktion des Balkongeländers beizumessen, weshalb Balkongeländer in der Regel von einem Fachmann bzw. Professionisten errichtet werden müssen, um sicherzustellen, dass die Tragelemente des Balkongeländers nachhaltig und robust miteinander verbunden sind, im Besonderen Verbindungsmittel, wie Verschraubungen, Bolzenverbindungen, Vernietungen und Schweißpunkte, welche die Tragelemente miteinander verbinden, richtig und fehlerlos gesetzt sind. Die Verbindungsmittel sollten bei einem Verbinden von mehreren Tragelementen üblicherweise so gesetzt bzw. eingesetzt werden, dass ungewollte Vorspannungen in der Tragelementkonstruktion vermieden sind, um bei einer späteren Benutzung ein Auftreten von Spannungsspitzen in der Tragelementkonstruktion möglichst zu unterbinden. Als weiterer wichtiger Aspekt ist außerdem beachtlich, dass Verschraubungen bzw. Vernietungen in der Regel so positioniert und ausgeführt sein sollten, dass diese bei einer späteren Benutzung kein Hindernis bzw. Verletzungsrisiko für einen Benutzer darstellen. Angesichts dieser Anforderungen ist ein Balkongeländer bzw. dessen Tragelementkonstruktion und deren Errichtung bei eingehender Betrachtung mit einem hohen Koplexitätsgrad verbunden, sodass deren Aufbau in der Praxis in der Regel nicht von einem Laien durchführbar ist, wenn eine hohe Stabilität und Sicherheit der Tragelementkonstruktion nachhaltig gewährleistet sein soll.

Hier setzt die Erfindung an. Aufgabe der Erfindung ist es, eine Tragelementkonstruktion für ein Balkongeländer der eingangs genannten Art anzugeben, welches eine hohe Praktikabilität und sichere Handhabung bietet.

Das Dokument AU 477 021 B2 offenbart eine Tragelementkonstruktion für ein Balkongeländer, um mehrere Tragelemente des Balkongeländers zur Errichtung des Balkongeländers miteinander zu verbinden, wobei die Tragelementkonstruktion ein erstes Tragelement, sowie ein zweites Tragelement und ein mehrteiliges Koppelanordnung umfasst.

Das Dokument US 2007/137134 A1 offenbart eine Tragelementkonstruktion für eine Wandstruktur, wobei mehrere Tragelemente zur Errichtung der Wandstruktur miteinander verbunden werden und wobei die Tragelementkonstruktion ein erstes Tragelement, sowie zweitesTragelementse und ein Koppelstück umfasst, wobei das Koppelstück in jeweils eine Aufnahmenut des jeweiligen Trageelements verschiebbar und formschlüssig eingesetzt wird.

Weiter ist es ein Ziel, eine Verwendung einer Tragelementkonstruktion der eingangs genannten Art anzugeben.

Die Aufgabe wird erfindungsgemäß durch eine Tragelementkonstruktion nach Anspruch 1 gelöst.

Hintergrund der Erfindung ist die Idee, eine Tragelementkonstruktion für ein Balkongeländer derart auszugestalten, dass auf übliche Verbindungsmittel zur Verbindung von zwei Tragelementen, wie Schrauben- und Bolzenverbindungen, Nietverbindungen bzw. Schweißverbindungen, welche eine relative Position zwischen den beiden Tragelementen zwar robust jedoch auch praktisch kaum verrückbar festlegen - sind mehrere Schweiß- oder Schraubverbindungen einmal gesetzt, ist in der Regel kaum noch Möglichkeit gegeben, eine durch diese festgelegte relative Position zweier Tragelemente im Nachhinein zu ändern -, in hohem Maße verzichtet werden kann. Werden solche Verbindungsmittel eingesetzt, ist in der Regel ein hohes Maß an Vorausplanung mit wenig Fehlertoleranz erforderlich, da diese Verbindungsmittel von Beginn der Errichtung der Tragelementkonstruktion an richtig gesetzt und positioniert werden müssen, da ein späteres Verändern deren Position nur eingeschränkt möglich ist und eine üblicherweise hohe Steifigkeit von Tragelementen einen späteren Ausgleich von zuvor erzeugten ungenauen Verbindungsmittelpositionierungen sowie ungenauen relativen Positionierungen der Tragelemente zueinander meist kaum oder nur durch Kraftbeaufschlagung der Tragelemente bzw. Verbindungsmittel und damit verbundenen erzeugten hohen mechanischen Spannungen möglich ist. Indem auf vorgenannte Weise vorgesehen ist, dass Tragelemente bzw. das erste Tragelement und zweite Tragelement mit bzw. durch das Koppelstück über ein erstes Führungssystem und zweites Führungssystem verbunden sind, sodass eine formschlüssige Verbindung jeweils zwischen dem ersten Tragelement und dem Koppelstück sowie dem zweiten Tragelement und dem Koppelstück umgesetzt ist, welche eine geführte relative Verschiebbarkeit zwischen jeweils den Tragelementen und dem Koppelstück erlaubt - im Folgenden auch als Verschiebezustand bezeichnet -, können die Tragelemente formschlüssig verbunden werden und erst anschließend eine präferierte relative Endposition zwischen den Tragelementen, üblicherweise mit einer hierfür vorgesehenen Arretierungsvorrichtung, festgelegt werden. Da eine relative Verschiebbarkeit sowohl zwischen dem ersten Tragelement und dem Koppelstück als auch zwischen dem zweiten Tagelement und dem Koppelstück gegeben ist, kann eine relative Position der Tragelemente zueinander flexibel auch später noch geändert bzw. justiert werden, wodurch ein spannungsarmer Aufbau errichtbar ist und spätere Spannungsspitzen effizient vermeidbar sind.

Es versteht sich, dass eine geführte Verschiebbarkeit üblicherweise bedeutet, dass eine Verschiebbarkeit im formschlüssig verbundenen Zustand in durch das jeweilige Führungssystem vorgegebenen Richtungen erfolgen kann, aber nicht, abgesehen von einer üblichen Spielpassung, in zumindest einer, häufig mehreren oder sämtlichen, zu dieser orthogonalen Richtungen oder Achsen ermöglicht ist. Für eine einfache Handhabung ist üblicherweise vorgesehen, dass die mit dem ersten bzw. zweiten Führungssystem bewirkte formschlüssige Verbindung zwischen dem ersten bzw. dem zweiten Tragelement und dem Koppelstück in zumindest zwei orthogonal aufeinander stehenden Richtungen, häufig sämtlichen Richtungen bzw. Achsen, welche jeweils orthogonal zu einer durch das erste Führungssystem bzw. zweite Führungssystem vorgegebenen Verschieberichtung, in welcher das jeweilige Tragelement relativ zum Koppelstück verschiebbar ist, gegeben ist.

Um eine relative Position zwischen dem ersten und zweiten Tragelement praktikabel einzustellen, ist es günstig, wenn das erste Tragelement durch das erste Führungssystem bzw. das zweite Tragelement durch das zweite Führungssystem derart mit dem Koppelstück formschlüssig verbindbar ist, dass das erste Tragelement relativ zum Koppelstück entlang einer Längsachse des ersten Tragelementes geführt verschiebbar ist bzw. das zweite Tragelement relativ zum Koppelstück entlang einer Längsachse des zweiten Tragelementes geführt verschiebbar ist. Zweckmäßig ist es hierbei, wenn eine geführte Verschiebbarkeit zumindest entlang einer Strecke ermöglicht ist, welche mehr als 10 %, insbesondere mehr als 20 %, bevorzugt mehr als 30 %, besonders bevorzugt mehr als 40 % einer Längserstreckung des ersten Tragelementes bzw. zweiten Tragelementes beträgt. Eine hohe Flexibilität ist dabei erreichbar, wenn eine geführte Verschiebbarkeit zumindest entlang einer Strecke gegeben ist, welche mehr als 75 %, bevorzugt mehr als 80 %, einer Längserstreckung des ersten bzw. zweiten Tragelementes beträgt. Für eine besonders hohe Flexibilität ist es dabei günstig, wenn eine geführte Verschiebbarkeit entlang einer gesamten Längserstreckung des ersten bzw. zweiten Tragelementes gegeben ist.

Praktisch ist es, wenn ein oder mehrere deaktivierbare Anschlagmechanismen vorhanden sind, welche ein Lösen eines mit dem ersten und/oder zweiten Führungssystem hergestellten Formschlusses zwischen dem ersten Tragelement bzw. zweiten Tragelement und dem Koppelstück verhindern und erst bei deaktivierten Anschlagelementen erlauben. Auf diese Weise ist ein unbeabsichtigtes Lösen des mit dem ersten bzw. zweiten Führungssystem hergestellten Formschlusses verhinderbar. Auf einfache Weise ist ein Anschlagmechanismus für eine formschlüssige Verbindung, also eine Verbindung durch räumlichen Einschluss, welche eine geführte Verschiebbarkeit erlaubt, dadurch umgesetzt, dass der Anschlagmechanismus ein bewegbares Anschlagelement aufweist, welches im deaktivierten Zustand die formschlüssige Verbindung aufhebt bzw. im aktivierten Zustand diese wieder herstellt. Das Anschlagelement kann hierzu beispielsweise als Klappe oder Verschiebeelement ausgebildet sein, welches bevorzugt zur Lösung des Formschlusses entgegen einer elastischen Kraft bewegbar ist, um das Anschlagelement zu deaktivieren.

Zweckdienlich ist es, wenn das erste Führungssystem und/oder zweite Führungssystem jeweils eine Arretierungsvorrichtung aufweist, um eine relative Position zwischen dem ersten Tragelement und dem Koppelstück bzw. zwischen dem zweiten Tragelement und dem Koppelstück in unterschiedlichen Relativpositionen zueinander formschlüssig und/oder kraftschlüssig, insbesondere unter Bildung einer Pressverbindung, festzulegen. Dadurch ist eine jeweilige relative Position zwischen dem ersten bzw. zweiten Tragelement und dem Koppelstück fixierbar bzw. arretierbar, sodass ein weiteres geführtes Verschieben des ersten bzw. zweiten Tragelementes relativ zum Koppelstück verhindert und insbesondere eine relative Position zwischen dem ersten und zweiten Tragelement festlegbar ist. Hierzu hat es sich bewährt, wenn die Arretierungsvorrichtung ein oder mehrere Presselemente aufweist, welche zur Herstellung einer Pressverbindung gegen ein oder mehrere Presselementgegenflächen pressbar sind, um die relative Position festzulegen. Für eine hohe Robustheit ist es günstig, wenn die Presselemente als Schrauben, insbesondere als Wurmschrauben, ausgebildet sind, welche am Koppelstück und/oder Tragelement angeordnet sind und auf eine am jeweiligen Tragelement bzw. Koppelstück angeordnete bzw. von diesem gebildete, Presselementgegenfläche, insbesondere durch Einschrauben, pressbar sind, um die Pressverbindung herzustellen. Alternativ oder kumulativ kann vorgesehen sein, dass die Presselemente mit einer Federkraft belastet sind, wenn diese gegen die Presselementgegenfläche pressen, um die Pressverbindung herzustellen bzw. eine Presskraft der Pressverbindung zu justieren. Vorzugsweise ist die Pressverbindung durch Verschieben der Presselemente entgegen der Federkraft lösbar.

Eine hohe Stabilität ist erreichbar, wenn das erste Führungssystem und/oder zweite Führungssystem jeweils ein erstes Führungselement, welches Teil des jeweiligen Tragelementes oder mit diesem verbunden ist, und jeweils ein zweites Führungselement, welches Teil des Koppelstückes oder mit diesem verbunden ist, aufweist, wobei eines der Führungselemente mit einer Führungsaufnahme und das andere Führungselement mit einem zur Führungsaufnahme formkorrespondierenden Führungszapfen gebildet ist, welcher Führungszapfen für ein Verbinden des jeweiligen Tragelementes mit dem Koppelstück unter Bildung eines Formschlusses zumindest teilweise in die Führungsaufnahme einfügbar ist, sodass der Führungszapfen in der Führungsaufnahme, insbesondere entlang einer Längserstreckung des Tragelementes, geführt verschiebbar ist. Je nach konkreter Ausprägung kann das erste Tragelement und zweite Tragelement jeweils die Führungsaufnahme aufweisen und das Koppelstück die dazu korrespondierenden Führungszapfen oder auch umgekehrt. Es ist auch umsetzbar, dass das erste Tragelement eine Führungsaufnahme und das zweite Tragelement einen Führungszapfen aufweist sowie entsprechend das Koppelstück dazu korrespondierend einen Führungszapfen und eine Führungsaufnahme aufweist.

Für eine hohe Robustheit und Stabilität hat es sich bewährt, wenn jeweils das erste Tragelement und zweite Tragelement die Führungsaufnahme aufweisen bzw. starr mit dieser verbunden sind und der zur Führungsaufnahme korrespondierende Führungszapfen als Teil des Koppelstückes ausgebildet oder mit diesem starr verbunden ist.

Eine geringe Fehleranfälligkeit ist erreichbar, wenn die Führungsaufnahme mit einem Kanal oder einer Nut ausgebildet ist, sodass der zur Führungsaufnahme korrespondierende Führungszapfen in einem in die Führungsaufnahme eingefügten Zustand durch den Kanal bzw. die Nut entlang des Kanals bzw. der Nut geführt verschiebbar ist.

Führungszapfen bezeichnet insbesondere jenen Teil des Koppelstückes, welcher zur Einnahme des Verschiebezustandes formschlüssig zumindest teilweise, insbesondere gänzlich, in die jeweilige Führungsaufnahme einfügbar ist. Im Besonderen wird jener Teil des Führungszapfens, welcher dabei gänzlich in die Führungsaufnahme einfügbar ist, als Führungszapfensegment bezeichnet.

Üblicherweise ist vorgesehen, dass das erste bzw. zweite Führungssystem derart ausgebildet ist, dass in einem Verschiebezustand, in welchem der Führungszapfen geführt verschiebbar in der Führungsaufnahme angeordnet ist, die Führungsaufnahme ein Führungszapfensegment des in die Führungsaufnahme eingefügten Führungszapfens hintergreift, um eine formschlüssige Verbindung zwischen Führungsaufnahme und Führungszapfen in einer Richtung orthogonal zur Verschieberichtung herzustellen. Dadurch kann praktikabel in einer weiteren Richtung orthogonal zur Verschieberichtung, in der Regel entgegen einer Tiefenrichtung der Führungsaufnahme, ein Formschluss hergestellt werden und insbesondere ein Herausgleiten des Führungszapfens aus der Führungsaufnahme verhindert werden. Hierzu ist es zweckmäßig, wenn der Führungszapfen, insbesondere entlang einer Längserstreckung, des Führungszapfens einen variierenden Außendurchmesser aufweist, um eine formschlüssige Verbindung zwischen dem Führungszapfen und der Führungsaufnahme herzustellen. Eine robuste Verbindung ist umsetzbar, wenn die Führungsaufnahme ein oder mehrere Begrenzungselemente aufweist, um das Führungszapfensegment mit den Begrenzungselementen zu hintergreifen. Der Führungszapfen kann eine oder mehrere zu den Begrenzungselementen formkorrespondierende Begrenzungselementaufnahmen aufweisen, in welche die Begrenzungselemente zur Herstellung der formschlüssigen Verbindung zwischen Führungsaufnahme und Führungszapfen bzw. für ein Hintergreifen des Führungszapfensegmentes einfügbar sind. Ein Einfügen des Führungszapfens in die Führungsaufnahme kann über eine am Tragelement bzw. an der Führungsaufnahme angeordnete Einführungsöffnung erfolgen. Die Einführungsöffnung kann beispielsweise gebildet sein, indem die Führungsaufnahme als seitlich offenes Profil ausgebildet ist oder an einem Abschnitt der Führungsaufnahme die Begrenzungselemente unterbrochen sind, sodass der Führungszapfen in die Führungsaufnahme einfügbar ist. Bevorzugt weist der Führungszapfen zumindest zwei an gegenüberliegenden Seiten des Führungszapfens angeordnete Begrenzungselementaufnahmen auf, in welche formkorrespondierende Begrenzungselemente einfügbar sind. Ist die Führungsaufnahme mit einem Kanal bzw. einer Nut ausgebildet, ist es günstig, wenn in einem zur Längsrichtung des Kanals bzw. der Nut orthogonalen Querschnitt ein oder mehrere Begrenzungselemente an einer Wand, mit welcher der Kanal bzw. die Nut gebildet ist, von der Wand abragend angeordnet sind, um das Führungszapfensegment, insbesondere durch Einfügen der Begrenzungselemente in korrespondierende Begrenzungselementaufnahmen am Führungszapfen, zu hintergreifen.

Alternativ kann es günstig sein, wenn kein Hintergreifen eines jeweiligen Führungszapfensegmentes mit der jeweiligen Führungsaufnahme vorgesehen ist, zumal das Hintergreifen, beispielsweise mit vorgenannten Begrenzungselementen, einen konstruktiven Zusatzaufwand erfordert und ein Einfügen bzw. Lösen des Führungszapfens in die bzw. von der Führungsaufnahme erschwert. Ein Herausgleiten bzw. ungewolltes Lösen des Führungszapfens entgegen einer, üblicherweise orthogonal zur Verschieberichtung ausgerichteten, Einfügerichtung des Führungszapfens in die Führungsaufnahme ist dadurch unterbunden, dass eine Bewegung des Koppelstückes entgegen dieser Einfügerichtung im anderen Tragelement blockierbar ist, beispielsweise durch eine formschlüssige oder kraftschlüssige Festsetzung oder Arretierung des Koppelstückes im anderen Tragelement, mit nachstehend beschriebener Blockiervorrichtung

Erfindungsgemäss ist in einer Richtung orthogonal zur Verschieberichtung, insbesondere entgegen der Einfügerichtung in die Führungsaufnahme, keine formschlüssige Verbindung zwischen dem Koppelstück bzw. dessen Führungszapfen und dem ersten bzw. zweiten Tragelement gegeben, sodass das Koppelstück durch Bewegen des Koppelstückes orthogonal zur Verschieberichtung vom jeweiligen Tragelement lösbar ist. Insbesondere kann dadurch vorteilhaft ein Verbinden bzw. Lösen des Formschlusses bzw. der Verbindung zwischen Koppelstück und jeweiligem Tragelement ohne relatives Verschieben dieser in Verschieberichtung erfolgen. Entsprechen ist es günstig, wenn die Führungsaufnahme derart ausgebildet ist. Zweckmäßig ist es, wenn dies für zumindest 30 %, insbesondere zumindest 50 %, bevorzugt zumindest 75%, insbesondere bevorzugt zumindest 90 %, einer Verschiebestrecke, entlang welcher ein geführte Verschiebbarkeit zwischen dem Koppelstück und dem jeweiligen Tragelement ermöglicht ist, vorliegt. Besonders bevorzugt gilt dies im Wesentlichen für die gesamte Verschiebestrecke. Bei einer Führungsaufnahme ergibt sich die Verschiebestrecke üblicherweise durch eine Längserstreckung der Führungsaufnahme. Dies ermöglicht ein schnelles und praktikables Einfügen bzw. Lösen des Koppelstückes vom jeweiligen Tragelement. Damit ist ein leicht zu handhabendes Verbinden und Lösen der Tragelemente miteinander bzw. voneinander umsetzbar. Dies hat sich insbesondere bewährt, wenn im Verschiebezustand eine durch das erste Führungssystem vorgegebene Verschieberichtung des ersten Tragelementes relativ zum Koppelstück winklig, insbesondere orthogonal, zu einer durch das zweite Führungssystem vorgegebenen Verschieberichtung des zweiten Tragelementes relativ zum Koppelstück ist. Beispielsweise, wenn die Längsachsen der Tragelemente im Verschiebezustand winklig, insbesondere orthogonal, zueinander ausgerichtet sind und eine jeweilige geführte Verschiebbarkeit entlang der jeweiligen Längsachse gegeben ist. Eine solche Verbindung bzw. Kopplung zwischen Tragelement und Koppelstück ohne formschlüssige Verbindung in einer Richtung orthogonal zur Verschieberichtung, insbesondere entgegen der Einfügerichtung in die Führungsaufnahme, kann beispielsweise erreicht werden indem die Führungsaufnahme keine vorgenannten Begrenzungselemente aufweist, um das Führungszapfensegment des Koppelstückes zu hintergreifen. Alternativ kann aber auch vorgesehen sein, dass die Führungsaufnahme solche Begrenzungselemente aufweist, aber das Koppelstück derart ausgebildet ist, dass bei einem Einfügen des Koppelstückes in die Führungsaufnahme bzw. im Verschiebezustand der Führungszapfen bzw. das Führungszapfensegment des Koppelstückes nicht von den Begrenzungselementen hintergriffen wird. Beispielsweise indem das Führungszapfensegment im Verschiebezustand eine Breite aufweist, welche kleiner ist als eine Beabstandung der Begrenzungselemente voneinander, sodass das Führungszapfensegment zwischen den Begrenzungselementen hindurchführbar ist. Je nach Ausbildung des Kopplungselementes bzw. dessen Führungszapfens kann auf diese Weise eine Art der Verbindung flexible gewählt werden. Beispielsweise können damit, wenn mehrere zweite Tragelemente auf in diesem Dokument beschriebene Weise mit dem ersten Tragelement verbunden sind, indem jeweils ein Koppelstück in dieselbe Führungsaufnahme des ersten Tragelementes, insbesondere im Verschiebezustand, formschlüssig verschiebbar eingefügt sind, beispielsweise je nach Ausbildung des Koppelstückes, zumindest eines der Koppelstücke mit Hintergreifen dessen Führungszapfensegmentes mit Begrenzungselementen der Führungsaufnahme des ersten Tragelementes und zumindest eines der Koppelstücke ohne Hintergreifen dessen Führungszapfensegmentes mit den Begrenzungselementen mit dem ersten Tragelement verbunden sein.

Bewährt hat es sich, daß erfindungsgemäß das erste Führungssystem und zweite Führungssystem jeweils eine deaktivierbare Blockiervorrichtung aufweist, um ein geführtes Verschieben des Koppelstückes relativ zum jeweiligen Tragelement in zumindest einer der Verschieberichtungen zu blockieren und bei deaktivierter Blockiervorrichtung zu erlauben. Im Besonderen kann auf diese Weise, wenn in einer Richtung, beispielsweise einer ersten Richtung, orthogonal zur Verschieberichtung keine formschlüssige Verbindung zwischen dem Koppelstück und dem ersten bzw. zweiten Tragelement gegeben ist, ein Herausgleiten oder Lösen des Koppelstückes von einem der Tragelemente verhindert werden, indem ein geführtes Verschieben des Koppelstückes relativ zum anderen Tragelement mit der Blockiervorrichtung in dieser, insbesondere ersten, Richtung verhindert ist. Dies kann auch mit vorgenannter Arretiervorrichtung umgesetzt sein. Die Blockiervorrichtung kann beispielsweise mit einem Anschlagelement gebildet sein, welches einen Anschlag gegen ein Verschieben des Koppelstückes in einer der Verschieberichtungen bildet. Beispielsweise kann das Anschlagelement einen Anschlag gegen ein Verschieben des Führungszapfens in der Führungsaufnahme in einer oder mehreren der Verschiebrichtungen bilden. Zweckmäßig ist es, wenn das Anschlagelement ein in die Führungsaufnahme, insbesondere lösbar, einsetzbares Bauteil ist. Für eine robuste Verbindung kann ein Einsetzen des Anschlagelementes in die Führungsaufnahme mit Herstellung einer kraftschlüssigen und/oder formschlüssigen Verbindung zwischen dem Anschlagelement und der Führungsaufnahme erfolgen. Das Anschlagelement kann zumindest teilweise oder gänzlich in die Führungsaufnahme versenkt einsetzbar sein. Praktisch ist es, wenn das Blockierelement entsprechend den Merkmalen des nachstehend beschriebenen Abdeckelementes ausgebildet ist, insbesondere auf entsprechende Weise mit der Führungsaufnahmen verbindbar ist. Günstig ist es, wenn das Anschlagelement einen Anschlagelementverschluss aufweist, um das Anschlagelement formschlüssig und/oder kraftschlüssig, insbesondere lösbar, an der Führungsaufnahme bzw. dem Tragelement anzuordnen. Der Anschlagelementverschluss kann insbesondere entsprechend nachstehend beschriebenen Abdeckelementverschluss ausgebildet sein. Eine hohe Praktikabilität ist erreichbar, wenn die Blockiervorrichtung als Teil vorgenannter Arretiervorrichtung ausgebildet ist.

Für eine hohe Stabilität und Praktikabilität ist es günstig, wenn der Führungszapfen bzw. das Führungszapfensegment in einem Verschiebezustand, in welchem das Führungszapfensegment geführt verschiebbar mit der Führungsaufnahme verbunden ist, in einer mit der Führungsaufnahme vorgegebenen Verschieberichtung eine größere Länge aufweist als in einer Richtung orthogonal zur Verschieberichtung. Auf diese Weise kann ein ungewolltes Verkippen des Führungszapfensegmentes im Verschiebezustand, insbesondere während eines Verschiebens des Führungszapfens relativ zur Führungsaufnahme, verhindert bzw. gehemmt werden. Zweckmäßig ist es hierbei, wenn eine Länge des Führungszapfensegmentes in Verschieberichtung zumindest zweimal, insbesondere zumindest dreimal, bevorzugt zumindest viermal, besonders bevorzugt zumindest fünfmal, so groß ist wie eine Länge des Führungszapfensegmentes in einer Richtung orthogonal zur Verschieberichtung. Eine ausgeprägte Handhabbarkeit ist dabei vor allem gegeben, wenn die Länge des Führungszapfensegmentes in Verschieberichtung maximal zehnmal, insbesondere maximal siebenmal, bevorzugt maximal sechsmal, so groß wie die Länge des Führungszapfensegmentes orthogonal zur Verschieberichtung ist. Alternativ oder kumulativ ist es für eine hohe Stabilität und Praktikabilität günstig, wenn das Führungszapfensegment im Verschiebezustand in einem Querschnitt orthogonal zu einer mit der Führungsaufnahme vorgegebenen Verschieberichtung bzw. Längsachse der Führungsaufnahme eine Breite aufweist, welche zumindest zweimal, insbesondere zumindest dreimal, bevorzugt zumindest viermal so groß ist wie eine zur Breite orthogonale Höhe des Führungszapfensegmentes. Eine ausgeprägte Handhabbarkeit ist dabei vor allem gegeben, wenn die Breite maximal zehnmal, bevorzugt maximal sechsmal, so groß wie die Höhe ist. Vorgenannte Ausbildungen gelten in analoger Weise vorteilhaft für den Führungszapfen.

Mit Verschiebezustand ist insbesondere ein Zustand bezeichnet, in welchem der Führungszapfen bzw. das Führungszapfensegment derart formschlüssig mit der Führungsaufnahme verbunden ist, dass der Führungszapfen mit der Führungsaufnahme geführt relativ zur Führungsaufnahme verschiebbar ist. Führungsrichtung bezeichnet insbesondere eine Richtung, in welche im Verschiebezustand der Führungszapfen durch die Führungsaufnahme vorgegeben relativ zur Führungsaufnahme geführt verschiebbar ist.

Praktisch ist es, wenn das Führungszapfensegment in einem Verschiebezustand, in welchem das Führungszapfensegment geführt verschiebbar mit der Führungsaufnahme verbunden ist, in einem Querschnitt orthogonal zur mit der Verschiebeaufnahme vorgegebenen Verschieberichtung eine polygonale Außenkontur, bevorzugt eine Außenkontur in Form eines Dreiecks, Vierecks, insbesondere Rechtecks, Quadrats oder Trapezes, aufweist. Dadurch ist eine fehlerarme Verschiebbarkeit und unkomplizierte Bedienbarkeit erreichbar. Es versteht sich, dass die Außenkontur auch höhereckig sein kann, vorgenannte Ausprägungen haben sich jedoch als besonders einfach zu bedienen herausgestellt. Vorgenannte Ausbildungen gelten in analoger Weise vorteilhaft für den Führungszapfen.

Eine einfache Ausrichtbarkeit der Tragelemente relativ zueinander durch Verschieben ist erreichbar, wenn eine Kontaktfläche, an welcher im Verschiebezustand das Führungszapfensegment an der Führungsaufnahme anliegt als Ebene ausgebildet ist. Bevorzugt ist es dabei, wenn die Kontaktfläche bzw. Ebene im Wesentlichen parallel zur Verschieberichtung ausgebildet ist. Auf diese Weise ist eine einfache Verschiebbarkeit des Führungszapfensegmentes in der Führungsaufnahme erreichbar, gleichzeitig aber eine ausreichende Kontaktflächenreibung umsetzbar, sodass ein selbsttätiges ungewolltes Verrutschen des Führungszapfensegmentes in der Führungsaufnahme in ausgeprägtem Maße gehemmt ist. Eine solche Kontaktfläche kann beispielsweise mit einem vorgenannten Begrenzungselement gebildet sein, welches das Führungszapfensegment hintergreift. Dies kann besonders effizient umgesetzt sein, indem die Kontaktfläche mit einer ebenen Außenfläche des Führungszapfensegmentes und mit einer ebenen Außenfläche der Führungsaufnahme gebildet ist.

Eine vorgenannte Arretierungsvorrichtung ist dabei praktikabel umsetzbar, wenn der Führungszapfen bzw. dessen Führungszapfensegment ein oder mehrere vorgenannte Presselemente, insbesondere in Form von Schrauben, bevorzugt Wurmschrauben, aufweist, welche zur Herstellung einer Pressverbindung, insbesondere durch Einschrauben, gegen eine oder mehrere an der Führungsaufnahme angeordnete Presselementgegenflächen pressbar sind, um den Führungszapfen in der Führungsaufnahme bzw. relativ zu dieser zu arretieren. Zweckmäßig ist es, wenn die Presselementgegenflächen mit der Führungsaufnahme gebildet oder an dieser angeordnet sind. Praktikabel können die Presselemente hierzu in Bohrlöchern des Führungszapfens bzw. des Führungszapfensegmentes angeordnet bzw. in diese einschraubbar sein, um mit Durchführen bzw. Einschrauben der Presselemente durch die Bohrlöcher hindurch die Pressverbindung herzustellen.

Von Vorteil ist es, wenn das Koppelstück bzw. die beiden zweiten Führungselemente derart ausgebildet sind, dass in einem Verschiebzustand, in welchem das erste Tragelement durch das erste Führungssystem und das zweite Tragelement durch das zweite Führungssystem jeweils geführt verschiebbar mit dem Koppelstück verbunden ist, eine durch das erste Führungssystem vorgegebene Verschieberichtung des ersten Tragelementes relativ zum Koppelstück winklig, insbesondere orthogonal, zu einer durch das zweite Führungssystem vorgegebenen Verschieberichtung des zweiten Tragelementes relativ zum Koppelstück ist. Auf diese Weise können besonders einfach handhabbar das erste Tragelement und zweite Tragelement winklig, insbesondere orthogonal, zueinander angeordnet bzw. miteinander verbunden werden, insbesondere mit hoher Praktikabilität, wenn vorgenannte Verschieberichtungen parallel zu einer Längsachse des jeweiligen Tragelementes ist.

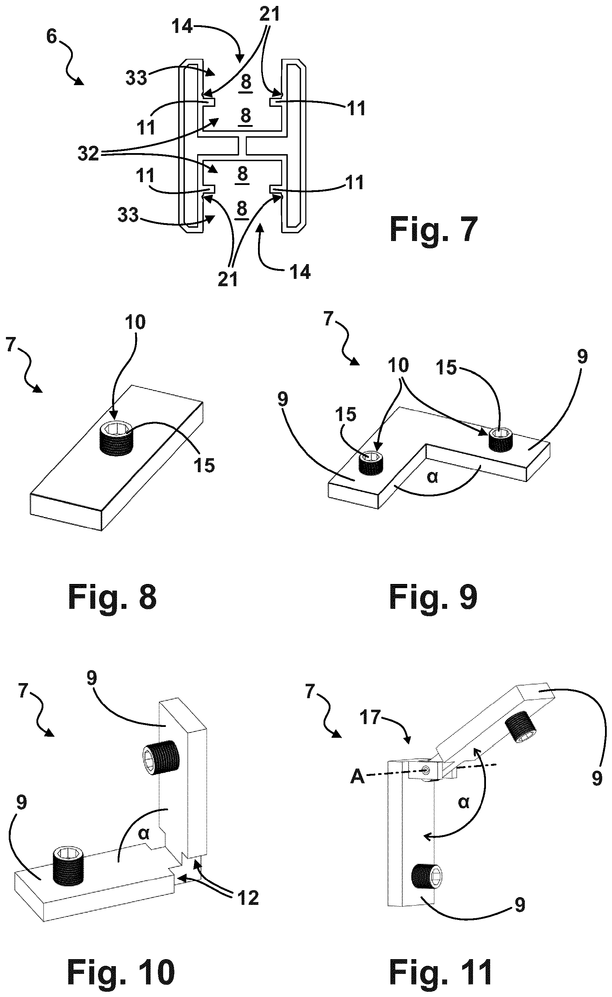

Eine robuste Umsetzung ist erreichbar, wenn das Koppelstück mit zwei, insbesondere winklig, miteinander verbundenen Schenkeln gebildet ist, wobei jeweils an einem der Schenkel eines der zweiten Führungselemente angeordnet ist oder jeweils einer der Schenkel eines der zweiten Führungselemente aufweist. Dies gilt besonders, wenn die beiden zweiten Führungselemente des Koppelstückes als Führungszapfen ausgebildet sind. Praktikabel ist es, wenn Längsachsen der Schenkel einen Schenkelwinkel definieren, um das erste Tragelement und das zweite Tragelement mit einem zum Schenkelwinkel korrespondierenden Tragelementwinkel zwischen den Tragelementen, insbesondere zwischen deren Längsachsen, zu verbinden. Indem mit dem Schenkelwinkel Einfluss auf den Tragelementwinkel nehmbar ist, kann je nach gewünschtem Tragelementwinkel zwischen dem ersten und zweiten Tragelement ein Koppelstück mit einem entsprechenden Schenkelwinkel gewählt werden. Auf diese Weise ist eine zu erzielende relative Ausrichtung der Tragelemente besonders einfach einstellbar. Je nach Anwendungsbedingungen sind unterschiedliche Schenkelwinkel von 0° bis 180° zwischen den Schenkeln bzw. deren Längsachsen zweckmäßig, wobei Schenkelwinkel von 90°, 45°, 30° sowie 120° und 135° besonders praktikabel sind und eine Tragelementkonstruktion mit besonders hoher Stabilität ermöglichen. Ein Schenkelwinkel von 0° bzw. 180° entspricht dabei einem Koppelstück, welches mit einem einzigen Schenkel gebildet ist, nachstehend dargestellt beispielsweise in Fig. 8.

Von Vorteil ist es, wenn das Koppelstück im Wesentlichen stabförmig ausgebildet ist, wobei eines der zweiten Führungselemente mit einer Längsseite des Koppelstückes und das andere zweite Führungselement mit einer Breitseite des Koppelstückes gebildet ist. Dadurch ist eine hohe Robustheit bei einer richtungsabhängigen Belastung in einem Einsatzzustand erreichbar. Dies hat sich insbesondere bei einer winkligen, insbesondere, orthogonalen Ausrichtung der Tragelemente bzw. deren Führungsrichtungen bewährt.

Beispielsweise kann das Koppelstück als Koppelstückstab ausgebildet sein, wobei eine Längsseite des Koppelstückstabes eines der zweiten Führungselemente und ein Endstück bzw. eine Breitseite des Stabes das andere zweite Führungselement bildet. Vorzugsweise sind die zweiten Führungselemente dabei als Führungszapfen ausgebildet. Der Koppelstückstab kann beispielsweise in Form eines Brettes oder einer Leiste ausgebildet sein.

Eine hohe Flexibilität ist erreichbar, wenn das Koppelstück ein Gelenk, insbesondere ein Scharnier, aufweist, welches die beiden zweiten Führungselemente relativ zueinander verschwenkbar miteinander verbindet, um das erste Tragelement und das zweite Tragelement relativ zueinander verschwenkbar miteinander zu verbinden. Auf diese Weise können die Tragelemente je nach Anforderungen verschwenkt werden, um eine gewünschte Relativposition bzw. Verschwenkung zwischen den Tragelementen zu justieren. Günstig ist es, wenn ein Fixiermechanismus vorhanden ist, um eine mit dem Gelenk eingestellte Verschwenkposition formschlüssig und/oder kraftschlüssig festzulegen bzw. zu fixieren. Für eine einfache Bedienbarkeit ist es günstig, wenn der Fixiermechanismus als Teil des Gelenkes ausgebildet ist. Bewährt hat es sich, wenn das Gelenk zwischen vorgenannten Schenkeln angeordnet ist, sodass die Schenkel relativ zueinander verschwenkbar sind. Das Gelenk kann eine oder mehrere Drehachsen definieren, um welche die beiden Schenkel relativ zueinander schwenkbar sind. Praktikabel ist es, wenn eine Drehachse des Gelenkes, um welche die beiden Schenkel relativ zueinander schwenkbar sind, orthogonal zu den Längsachsen beider Schenkel ausgerichtet ist. Alternativ oder kumulativ kann die Drehachse orthogonal zu einem Schenkel und parallel zum anderen Schenkel ausgerichtet sein. Für eine hohe Flexibilität kann das Gelenk als Kugelgelenk ausgebildet sein.

Für eine ausgeprägte Robustheit ist es vorteilhaft, wenn die Führungsaufnahme zumindest teilweise, bevorzugt gänzlich, in einer, insbesondere rinnenförmigen, Vertiefung des Tragelementes angeordnet oder mit einer solchen gebildet ist. Auf diese Weise ist das Führungssystem besonders robust ausbildbar und darüber hinaus vor Umgebungseinflüssen und Verschmutzungen geschützt. Insbesondere kann vorgenannte Nut oder vorgenannter Kanal der Führungsaufnahme mit der Vertiefung gebildet sein. Vorzugsweise erstreckt sich die Vertiefung bzw. deren Längsachse dabei entlang einer Längserstreckung der Führungsaufnahme bzw. des Tragelementes.

Besonders bewährt hat es sich, wenn das Tragelement eine weitere Führungsaufnahme aufweist, welche in der Vertiefung angeordnet oder mit dieser gebildet ist, also das Tragelement mehrere, bevorzugt zwei, Führungsaufnahmen aufweist, welche in der Vertiefung angeordnet bzw. mit dieser gebildet sind. Dadurch sind eine hohe Flexibilität und Einsatzvielfalt erreichbar. Beispielsweise können unterschiedliche Koppelstücke zum Verbinden des Tragelementes, insbesondere auf vorgenannte Weise, mit mehreren weiteren Tragelementen, beispielsweise das erste Tragelement mit mehreren weiteren zweiten Tragelementen oder umgekehrt, auf die Führungsaufnahmen verteilt in diese eingefügt werden. Zweckmäßig kann es sein, wenn die Führungsaufnahmen dabei parallel zueinander verlaufenden Verschiebestrecken, entlang welcher in diese eingefügte Koppelstücke geführt verschiebbar sind, definieren. Vorteilhaft können mehrere weitere Führungsaufnahmen in der Vertiefung angeordnet bzw. mit dieser gebildet sein.

Die in der Vertiefung angeordneten bzw. mit dieser gebildeten Führungsaufnahmen können dabei entsprechend einer in diesem Dokument, insbesondere vorstehend, beschriebenen Ausführungsvariante ausgebildet sein. Beispielsweise, wie insbesondere vorstehend dargelegt, jeweils mit einem Kanal oder einer Nut. Für eine hohe Einsatzfähigkeit ist es dabei günstig, wenn die Führungsaufnahmen unterschiedlich ausgebildet sind, um jeweils eine andere Art von Koppelstücken aufzunehmen oder Koppelstücke jeweils mit einer anderen Verbindungsart, beispielsweise mit oder ohne Hintergreifen, zu verbinden. Besonders bewährt hat es sich, wenn eine der Führungsaufnahmen, wie vorstehend dargelegt, ausgebildet ist, im Verschiebezustand ein Führungszapfensegment eines in die Führungsaufnahme eingefügten Führungszapfens zu hintergreifen, um eine formschlüssige Verbindung zwischen der Führungsaufnahme und dem Führungszapfen in einer Richtung orthogonal zur Verschieberichtung herzustellen. Beispielsweise mit vorgenannten Begrenzungselementen. Und die zumindest eine andere Führungsaufnahme, wie vorstehend dargelegt, nicht für ein entsprechendes Hintergreifen eines Führungszapfens ausgebildet ist bzw. derart ausgebildet ist, dass im Verschiebezustand in einer Richtung orthogonal zur Verschieberichtung, insbesondere entgegen einer Tiefenrichtung der Vertiefung, keine formschlüssige Verbindung zwischen einem in diese Führungsaufnahme eingefügten Koppelstück bzw. dessen Führungszapfen und der Führungsaufnahme gegeben ist, sodass das Koppelstück durch Bewegen des Koppelstückes orthogonal zur Verschieberichtung vom Tragelement lösbar ist.

Ein kompakter Aufbau ist erreichbar, wenn die Führungsaufnahmen dabei in Tiefenrichtung der Vertiefung hintereinander angeordnet sind. Besonders bewährt hat es sich, wenn dabei eine in Tiefenrichtung nachgelagerte Führungsaufnahme, wie beschrieben, dazu ausgebildet ist, im Verschiebezustand ein Führungszapfensegment eines diese eingefügten Führungszapfens zu hintergreifen, beispielsweise mit Begrenzungselementen, und eine dieser vorgelagerte Führungsaufnahme, wie beschrieben, nicht für ein entsprechendes Hintergreifen eines Führungszapfens ausgebildet ist bzw. derart ausgebildet ist, dass im Verschiebezustand in einer Richtung orthogonal zur Verschieberichtung, insbesondere entgegen der Tiefenrichtung der Vertiefung, keine formschlüssige Verbindung zwischen dieser und in diese eingefügtem Koppelstück gegeben ist. Die kann besonders praktikabel umgesetzt sein, indem die Vertiefung bildende Vertiefungswände Begrenzungselemente aufweisen, sodass die Begrenzungselemente einen in Tiefenrichtung den Begrenzungselementen nachgeordneten Vertiefungsbereich zur Bildung der nachgelagerten Führungsaufnahme und einen in Tiefenrichtung den Begrenzungselementen vorgeordneten Vertiefungsbereich zur Bildung der vorgelagerten Führungsaufnahme innerhalb der Vertiefung definieren. Zweckmäßig können dabei die Begrenzungselemente für ein in die vorgelagerte Führungsaufnahme formschlüssig verschiebbar bzw. im Verschiebezustand eingefügtes Führungszapfensegment in Tiefenrichtung der Vertiefung einen Formschluss bzw. Anschlag bilden bzw. das Führungszapfensegment an den Begrenzungselementen anliegen. Auf diese Weise können je nach konkretem Umsetzungszweck unterschiedliche Verbindungsarten bzw. unterschiedliche Koppelstücke zur Herstellung einer formschlüssig verschiebbaren Verbindung mit dem Tragelement eingesetzt werden. Im Besonderen kann je nach Ausbildung, insbesondere Form, des Koppelstückes bzw. dessen Führungszapfensegmentes das Koppelstück in die in Tiefenrichtung vorgelagerte oder nachgelagerte Führungsaufnahme formschlüssig verschiebbar eingefügt sein. Dies kann wie, insbesondere vorstehend, beschrieben in der nachgelagerte Führungsaufnahmen mit oder ohne Hintergreifen des Führungszapfensegmentes durch die Begrenzungselemente erfolgen.

Es versteht sich, dass das erste und/oder zweite Tragelement, derart ausgebildet sein kann.

Um eine hohe Sicherheit und Robustheit nachhaltig sicherzustellen, ist es günstig, wenn zumindest ein Abdeckelement vorhanden ist, welches formschlüssig und/oder kraftschlüssig derart am Tragelement anordenbar ist, dass in Tiefenrichtung der Vertiefung das Abdeckelement einen Öffnungsquerschnitt der Vertiefung bzw. die in der Vertiefung angeordnete Führungsaufnahme zumindest teilweise, insbesondere abschnittsweise, durch das Abdeckelement verdeckt ist. Der Öffnungsquerschnitt ist dabei üblicherweise orthogonal zur Tiefenrichtung angeordnet zu sehen. Vorzugsweise sind mehrere derartige Abdeckelemente vorhanden. Um eine hohe Sicherheit und Robustheit effizient umzusetzen, ist es zweckmäßig, wenn das Abdeckelement eine Abdeckfläche aufweist, welche in einem am Tragelement angeordneten Zustand in Tiefenrichtungssicht zumindest 60 %, bevorzugt zumindest 75 %, insbesondere bevorzugt zumindest 90 %, einer zur Längsrichtung der Vertiefung orthogonalen Vertiefungsbreite der Vertiefung verdeckt bzw. überdeckt. Bevorzugt verdeckt das Abdeckelement die Vertiefungsbreite im Wesentlichen gänzlich. Vorzugsweise ist die Abdeckfläche als ebene Fläche, beispielsweise in Form einer Abdeckplatte, ausgebildet. Das Abdeckelement kann einer Öffnung der Vertiefung vorgelagert oder zumindest teilweise, insbesondere gänzlich, in der Vertiefung anordenbar bzw. in die Vertiefung einfügbar sein. Praktisch ist es, wenn das Abdeckelement derart am Tragelement anordenbar ist, dass in einem zur Vertiefungslängsachse orthogonalen Vertiefungsquerschnitt ein Rand der Abdeckfläche in Tiefenrichtung dieselbe Höhe aufweist wie ein Rand der Vertiefung, insbesondere ein Rand der Abdeckfläche im Wesentlichen stetig in einen Rand der Vertiefung übergeht. Vorzugsweise bilden die Abdeckfläche und ein Rand der Vertiefung eine Ebene. Dadurch ist ein Verletzungsrisiko bei einer späteren Benutzung reduzierbar. Mit vorgenannten Maßnahmen ist die Vertiefung bzw. die in dieser angeordnete Führungsaufnahme vor äußeren Witterungseinflüssen schützbar. Im Besonderen begrenzen die Abdeckelemente eine unerwünschte Zugänglichkeit für einen späteren Benutzer zu den Führungssystemen, insbesondere zur Führungsaufnahme und einem mit diesem verbundenen Führungszapfen bzw. zur Arretierungsvorrichtung. Ferner kommt dem Abdeckelement eine ästhetische Wirkung zu, zumal dieses das Führungssystem, vorzugsweise optisch, verdeckt und damit ein Konstruktions- bzw. Verbindungsmechanismus der Tragelementkonstruktion für einen späteren Benutzer weniger ersichtlich, insbesondere vor diesem verborgen, ist.

Zweckmäßig ist es, wenn ein Abdeckelementverschluss, insbesondere in Form eines Schnellverschlusses, vorhanden ist, um das Abdeckelement formschlüssig und/oder kraftschlüssig, insbesondere lösbar, am Tragelement anzuordnen. Eine einfache Handhabbarkeit ist erreichbar, wenn der Abdeckelementverschluss als Schnellverschluss ausgebildet ist. Ein Schnellverschluss ermöglicht es, eine Verbindung schnell und ohne Werkzeug zu lösen bzw. zu schließen. Günstig ist es, wenn der Schnellverschluss als Schnappverschluss ausgebildet ist. Dabei ist üblicherweise vorgesehen, dass eine formschlüssige und/oder kraftschlüssige Verbindung, insbesondere zwischen dem Abdeckelement und dem Tragelement, herstellbar ist, indem ein Schnappelement elastisch verformt wird und anschließend einen Formschluss und/oder Kraftschluss bewirkt. In der Regel ist der Formschluss bzw. Kraftschluss durch abermaliges elastisches Verformen des Schnappelementes wieder aufhebbar.

Eine einfache Handhabung ist erreichbar bzw. der Abdeckelementverschluss auf einfache Weise umsetzbar, wenn das Abdeckelement bzw. das Tragelement ein oder mehrere Befestigungsstifte und das Tragelement bzw. das Abdeckelement ein oder mehrere dazu korrespondierende Befestigungsstiftaufnahmen aufweist, um das Abdeckelement durch Einfügen der Befestigungsstifte in die Befestigungsstiftaufnahmen formschlüssig und/oder kraftschlüssig mit dem Tragelement, insbesondere lösbar, zu verbinden. Im Besonderen kann der Befestigungsstift mit bzw. als vorgenanntes Schnappelement ausgebildet sein. Praktikabel und sicherheitsfördernd ist es, wenn in einem am Tragelement angeordneten Zustand der Abdeckelementverschluss, insbesondere die Befestigungsstifte bzw. Befestigungsstiftaufnahmen, in Tiefenrichtung der Vertiefung von der Abdeckfläche verdeckt werden. Zweckmäßig können hierzu am Abdeckelement angeordnete Vertiefungsstifte bzw. Vertiefungsstiftaufnahmen an einer der Vertiefung zugewandten Seite der Abdeckfläche angeordnet sein.

Für eine robuste Verbindung und ästhetische Anordnung hat es sich bewährt, wenn in einem am Tragelement angeordneten Zustand des Abdeckelementes die Befestigungsstifte bzw. Befestigungsstiftaufnahmen in der Vertiefung bzw. zwischen die Vertiefung bildenden Vertiefungswänden angeordnet sind. Hierzu können am Tragelement angeordnete Vertiefungsstifte bzw. Vertiefungsstiftaufnahmen mit Vertiefungswänden gebildet oder an diesen angeordnet sein. Bewährt hat es sich, wenn das Abdeckelement mehrere Vertiefungsstifte und das Tragelement bzw. die Vertiefungswände mehrere korrespondierende Vertiefungsstiftaufnahmen aufweisen. Vertiefungsstiftaufnahmen sind dabei vorzugsweise an einander gegenüberliegenden Vertiefungswänden angeordnet, üblicherweise der in der Vertiefung angeordneten Führungsaufnahme in Tiefenrichtung der Vertiefung vorgelagert.

Günstig ist es, wenn das Abdeckelement derart am Tragelement formschlüssig anordenbar ist, dass das Abdeckelement entlang einer Längserstreckung der Vertiefung bzw. einer Längserstreckung der Führungsaufnahme relativ zum Tragelement verschiebbar ist. Dadurch kann das Abdeckelement nach Anordnen am Tragelement auf einfache Weise in eine gewünschte Position verschoben werden. Praktikabel ist es hierzu, wenn die Befestigungsstiftaufnahme als Befestigungsrinne ausgebildet ist, in welche der Befestigungsstift formschlüssig einfügbar ist, wobei sich die Befestigungsrinne entlang einer Längserstreckung der Vertiefung erstreckt, sodass der Befestigungsstift nach formschlüssigem Einfügen des Befestigungsstiftes in die Befestigungsrinne entlang der Befestigungsrinne verschiebbar ist.

Üblicherweise ist vorgesehen, dass eine Mehrzahl von Abdeckelementen am Tragelement die Vertiefung bzw. die Führungsaufnahme zumindest abschnittsweise verdeckend anordenbar sind.

Für eine hohe Praktikabilität und Funktionalität ist es zweckdienlich, wenn das Abdeckelement zumindest eine Halteinrichtung aufweist, um in einem am Tragelement angeordneten Zustand des Abdeckelementes mit der Halteeinrichtung ein Flächenelement, insbesondere ein Plattenelement, formschlüssig und/oder kraftschlüssig am Tragelement, üblicherweise zwischen mehreren Tragelementen angeordnet, zu fixieren. Dadurch kann auf einfache Weise ein Flächenelement, beispielsweise in Form einer Sichtblende oder einer Durchgangsbegrenzung, bei Geländern auch als Feldfüllung bezeichnet, zwischen mehreren Tragelementen fixiert bzw. aufgespannt werden. Üblicherweise ist hierbei vorgesehen, dass mehrere Abdeckelemente, aufweisend Halteeinrichtungen, an einem oder mehreren Tragelementen, insbesondere dem ersten und/oder zweiten Tragelement, angeordnet sind, um das Flächenelement mit den Halteeinrichtungen der Abdeckelemente zu fixieren. Praktikabel kann es sein, wenn ein Abdeckelement mehrere Halteeinrichtungen aufweist. Eine widerstandsfähige Fixierung des Flächenelementes ist erreichbar, wenn die Halteeinrichtung eine Klemmvorrichtung aufweist, um das Flächenelement kraftschlüssig bzw. reibschlüssig mit der Halteeinrichtung zu fixieren. Praktisch ist es, wenn die Halteeinrichtung mit der Abdeckfläche des Abdeckelementes gebildet oder an dieser angeordnet ist.

Günstig ist es, wenn die Halteeinrichtung ausgebildet ist, einen Rand des Flächenelementes formschlüssig zu umgreifen, um das Flächenelement mit der Halteeinrichtung zu fixieren. Das Haltelement kann hierzu mehrere, insbesondere zwei, Haltearme aufweisen, zwischen welchen das Flächenelement derart einfügbar ist, dass die Haltearme an gegenüberliegende Seiten des Flächenelementes angeordnet sind. Die Haltearme können dabei ausgebildet sein, eine Presskraft auf Oberflächen der gegenüberliegenden Seiten auszuüben, um das Flächenelement kraftschlüssig bzw. reibschlüssig zu fixieren. Üblicherweise ist vorgesehen, dass die Haltearme von der Abdeckfläche abragend ausgebildet sind. Ein robuster Aufbau ist erreichbar, wenn die Halteeinrichtung bzw. die Abdeckarme mit einem Abdeckflächenabschnitt der Abdeckfläche gebildet sind, wobei der Abdeckflächenabschnitt derart geformt ist, dass dieser eine Furche bildet, in welche ein Rand des Flächenelementes formschlüssig einfügbar ist. Bewährt hat es sich, wenn die Furche in einem Querschnitt im Wesentlichen rechteckig, quadratisch, U-förmig oder V-förmig geformt ist.

Eine einfache Handhabbarkeit ist erreichbar, wenn ein oder mehrere der Tragelemente als Hohlkörper, insbesondere Hohlprofile, ausgebildet sind. Alternativ oder kumulativ kann das Koppelstück als Hohlkörper ausgebildet sein. Vorzugsweise sind ein oder mehrere der Tragelemente und/oder Koppelstücke mit bzw. aus Metall, insbesondere einem Leichtmetall, Kunststoff oder einem Verbundmaterial gebildet. Für eine einfache Herstellbarkeit hat es sich bewährt, wenn ein oder mehrere der Tragelemente als Profile, insbesondere Konstruktionsprofile, ausgebildet sind.

Praktisch ist es, wenn das erste und/oder zweite Tragelement ein Montagestützenverbindeelement aufweist, welches formkorrespondierend zu einer Montagestützenverbindeschiene einer Montagestütze ausgebildet ist, um das Tragelement formschlüssig und/oder kraftschlüssig, insbesondere mit Stecken des Montagestützenverbindeelementes auf oder in die Montagestützenverbindeschiene, mit der Montagestütze zu verbinden. Die Montagestütze dient in der Regel dazu, ein Tragelement mit einem Umgebungselement einer Umgebung, beispielsweise einem Boden oder einer Wand, zu verankern. Für eine einfache Handhabung ist es günstig, wenn das Montagestützenverbindeelement mit einer Montagestützenaufnahme ausgebildet ist, in welche die Montagestützenverbindeschiene einfügbar ist, um das Tragelement mit der Montagestütze formschlüssig zu verbinden. Eine hohe Robustheit ist erreichbar, wenn die Montagestützenaufnahme mit einer Bohrung oder einem Kanal im Tragelement gebildet ist, in welche die Montagestützenverbindeschiene formschlüssig einfügbar ist. Bevorzugt ist dabei vorgesehen, dass eine Längsachse der Montagestützenaufnahme, insbesondere der Bohrung bzw. des Kanals, im Wesentlichen parallel zur einer Längserstreckung des Tragelementes verläuft. Je nach Anwendungszweck kann es günstig sein, wenn die Montagestützenaufnahme in einem zur Längsachse des Tragelementes orthogonalen Querschnitt, insbesondere in Bezug auf einen geometrischen Schwerpunkt des Tragelementes, im Wesentlichen zentrisch oder exzentrisch im Tragelement angeordnet ist. Vorzugsweise ist dabei die Montagestützenaufnahme derart exzentrisch im Tragelement angeordnet, dass diese innerhalb des Tragelementes zwischen einem Zentrum, insbesondere einem geometrischen Schwerpunkt, des Tragelementes und einer dem ersten bzw. zweiten Führungselement gegenüberliegenden Seite des Tragelementes positioniert ist. Dadurch kann die Tragelementkonstruktion, beispielsweise bei einem Balkongeländer, leicht versetzt von einer durch eine Montagestütze vorgegebenen Positionierung angeordnet werden, sodass bei einer späteren Benutzung die Montagestützen weniger Behinderung für einen Benutzer darstellen. So kann beispielsweise eine an einem Balkon befestigte Montagestütze in einem größeren Abstand einer Balkonbodenplatte des Balkons vorgelagert angeordnet werden.

Für eine hohe Stabilität hat es sich bewährt, wenn die Montagestützenaufnahme in einem zu deren Längserstreckung orthogonalen Querschnitt eine polygonale Form, insbesondere eine Form eines Dreiecks, Rechtecks oder Quadrats, aufweist. Eine hohe Flexibilität ist erreichbar, wenn mehrere Montagestützenaufnahmen vorhanden sind, wobei vorzugsweise eine der Montagestützenaufnahmen auf vorgenannte Weise im Wesentlichen zentral im Tragelement angeordnet ist und eine der Montagestützenaufnahmen auf vorgenannte Weise exzentrisch dem Verbindungselement gegenüberliegend im Tragelement angeordnet ist. Die vorgenannte Montagestütze kann insbesondere Teil der Tragelementkonstruktion sein, um das erste und/oder zweite Tragelement mit der Montagestütze zu verbinden. Die Montagestütze weist üblicherweise eine Verankerungseinrichtung auf, um die Montagestütze formschlüssig und/oder kraftschlüssig an einem Umgebungselement, in der Regel einem Boden oder einer Wand, zu fixieren.

Von Vorteil ist es, wenn eine Halteschiene vorhanden ist, an welcher mehrere Montagestützen, üblicherweise entlang einer Längsachse der Halteschiene, beabstandet voneinander angeordnet sind. Auf diese Weise können die Montagestützen zeiteffizient und praktikabel, insbesondere mit vorgegebener Beabstandung, positioniert werden. Tragelemente können dann aufwandsarm mit den Montagestützen verbunden werden, insbesondere, wenn mit der Tragelementkonstruktion ein Balkongeländer gebildet wird. Die Montagestützen können formschlüssig, kraftschlüssig und/oder stoffschlüssig mit der Halteschiene verbunden sein. Vorzugsweise sind die Montagestützen derart mit der Halteschiene verbunden, dass Längsachsen der Montagestützenverbindeschienen der Montagestützen quer, meist orthogonal, zur Längsachse bzw. Längserstreckung der Halteschiene, üblicherweise parallel zueinander, ausgerichtet sind. Für eine einfache Montage hat es sich bewährt, wenn die Montagestützenverbindeschienen in Draufsicht, üblicherweise mit Sichtrichtung parallel zur Längsrichtung der Montagestützenverbindeschienen bzw. quer zur Längsachse der Halteschiene, seitlich entlang der Längsachse der Halteschiene angeordnet sind. Günstig ist es, wenn die Halteschiene, insbesondere in Draufsicht, quer zur Längsrichtung mehrere Einschnitte aufweist, wobei jeweils eine der Montagestützenverbindeschienen in jeweils einem der Einschnitte zumindest teilweise, insbesondere gänzlich, versenkt angeordnet ist. Auf diese Weise können ein oder mehrere Spalte, welche häufig zwischen der Halteschiene und der an den Montagestützen montierten miteinander verbundenen Tragelemente vorhanden sind, reduziert werden und/oder die Montagestützen vor äußeren Belastungen geschützt werden. Üblicherweise ist dabei jeder Montagestützenverbindeschiene ein Einschnitt und umgekehrt zugeordnet. Zweckmäßig kann dies umgesetzt sein, indem die Halteschiene ein oder mehrere Spaltabdeckelemente aufweist, welche quer zu einer Längsachse der Halteschiene von einem Basiskörper der Halteschiene abragen, wobei die Einschnitte durch Vertiefungen in den Spaltabdeckelementen und/oder durch Beabstandungen zwischen den Spaltabdeckelementen gebildet sind. Das Spaltabdeckelement kann beispielsweise mit einem Band gebildet sein, wobei eine Bandfläche des Bandes winklig, insbesondere orthogonal, vom Basiskörper, üblicherweise zur Seite der Haltschiene, an welcher die Montagestützen angeordnet sind, abragt. Bevorzugt sind Spaltabdeckelemente an einer Oberkante und/oder Unterkante Halteschiene angeordnet. Ein einfacher Aufbau ist erreichbar, wenn der Basiskörper mit einem Streifen gebildet ist, wobei eine Streifenfläche des Streifens im Wesentlichen parallel zu den Montagestützenverbindeschienen ausgerichtet ist. Die Spaltabdeckelemente ragen dann üblicherweise winklig, insbesondere orthogonal, zur Streifenebene von dieser ab. Praktisch ist es, wenn die Halteschiene, insbesondere der Basiskörper und/oder die Spaltabdeckelemente, mit bzw. aus Blech gebildet sind.

Vorgenanntes ist besonders praktikabel, wenn mit der Tragelementkonstruktion ein Balkongeländer gebildet wird, wobei insbesondere die Halteschiene an einer Vorderkante und/oder Frontfläche einer Balkonbodenplatte montiert wird.

Mit Vorteil ist vorgesehen, dass die Tragelementkonstruktion mehrere zweite Tragelemente aufweist, welche jeweils über ein Koppelstück mit dem ersten Tragelement verbindbar bzw. verbunden sind, indem jeweils zwischen dem ersten Tragelement und dem Koppelstück und dem zweiten Tragelement und dem Koppelstück ein erstes Führungssystem oder zweites Führungssystem vorgesehen ist, um die Tragelemente formschlüssig mit dem Koppelstück zu verbinden, sodass sowohl das erste Tragelement relativ zum Koppelstück geführt verschiebbar ist als auch das zweite Tragelement relativ zum Koppelstück geführt verschiebbar ist, um eine Relativposition des ersten Tragelementes relativ zum zweiten Tragelement einzustellen. Es versteht sich, dass die mehreren zweiten Tragelemente bzw. Koppelstücke jeweils entsprechend vorgenannten, Merkmalen, Ausprägungen und Wirkungen ausgebildet bzw. mit dem ersten Tragelement verbindbar bzw. verbunden sein können.

Eine hohe Praktikabilität ist erreichbar, wenn mehrere zweite Tragelemente über dasselbe Koppelstück mit dem ersten Tragelement, insbesondere auf vorgenannte Weise, verbindbar bzw. verbunden sind. Das Koppelstück, weist hierzu in der Regel ein zum ersten Verbindungselement des ersten Tragelementes korrespondierendes zweites Verbindungselement sowie mehrere weitere zweite Verbindungselemente auf, welche jeweils zu einem ersten Verbindungselement der zweiten Tragelemente korrespondieren. Beispielsweise kann das Koppelstück drei Führungszapfen aufweisen, um eine Führungsaufnahme des erstes Tragelementes über das Koppelstück mit Führungsaufnahmen von zwei zweiten Tragelementen durch Einfügen jeweils eines der Führungszapfen in jeweils eine der Führungsaufnahmen formschlüssig zu verbinden. Insbesondere können auf diese Weise die zweiten Tragelemente besonders einfach mit einem vorgegebenen Abstand und/oder parallel zueinander ausgerichtet mit dem ersten Tragelement verbunden werden. Für eine hohe Zeiteffizienz bei einem Aufbau ist es dann günstig, wenn wie vorgenannt beschrieben in einer Richtung orthogonal zur Verschieberichtung keine formschlüssige Verbindung zwischen dem Koppelstück und dem ersten bzw. jeweiligen zweiten Tragelement gegeben ist. Entsprechend ist es dann für eine hohe Robustheit zweckmäßig, wenn eine vorgenannte deaktivierbare Blockiervorrichtung vorhanden ist, um ein geführtes Verschieben des Koppelstückes relativ zum jeweiligen anderen Tragelement in zumindest einer der Verschieberichtungen zu blockieren. Für eine einfache Handhabbarkeit ist es günstig, wenn das Koppelstück als Koppelstückstab ausgebildet ist, wobei eine Längsseite des Koppelstückstabes eines der zweiten Führungselemente und die Endstücke bzw. Breitseiten des Koppelstückstabes jeweils das andere zweite Führungselement bilden. Vorzugsweise sind die zweiten Führungselemente dabei als Führungszapfen ausgebildet. Vorteilhaft kann es sein, wenn wie insbesondere vorgenannt beschrieben das erste Tragelement bzw. eines oder mehrere der zweiten Tragelemente jeweils eine Vertiefung mit mehreren Führungsaufnahmen, welche insbesondere wie vorstehend ausgeführt in Tiefenrichtung der Vertiefung hintereinander angeordnet sind, aufweisen. Auf diese Weise ist eine besonders ausgeprägte Einsatzflexibilität ermöglicht.

Es versteht sich, dass die mehreren zweiten Tragelemente in deren konkreten Ausbildung jeweils unterschiedliche Ausprägungen, insbesondere Größen, Formen und/oder weitere Merkmale, aufweisen können und grundsätzlich lediglich in Bezug auf die erfindungsgemäßen Merkmale und Wirkungen als gleichwertig bzw. einer gleichen Klasse zugehörig zu verstehen sind. Je nach Anwendungszweck können mehrere zweite Tragelemente auch gleich bzw. mit gleichen Ausprägungen ausgebildet sein. Dies gilt in analoger Weise für mehrere erste Tragelemente. Insbesondere können in analoger Weise erste Tragelemente und zweite Tragelemente grundsätzlich mit gleichen oder voneinander verschiedenen Merkmalen bzw. Ausprägungen ausgebildet sein.

Zweckmäßig ist es, wenn das erste Führungssystem, mit welchem die mehreren zweiten Tragelemente jeweils mit Koppelstücken mit dem ersten Tragelement verbunden sind, dasselbe erste Führungselement, bevorzugt dieselbe Führungsaufnahme, am ersten Tragelement aufweisen. Dies ist auf einfache Weise umsetzbar, indem das erste Führungselement ausgebildet ist, eine formschlüssige Verbindung mit mehreren zweiten Führungselementen zu bilden, sodass die zweiten Führungselemente relativ zum ersten Führungselement geführt verschiebbar sind. Beispielsweise kann die Führungsaufnahme am ersten Tragelement derart ausgebildet sein, dass die Führungszapfen mehrerer Koppelstücke in die Führungsaufnahme einfügbar und in dieser geführt verschiebbar sind. Zweckmäßig ist es, wenn die einzelnen Führungszapfen mit den jeweiligen Arretierungsvorrichtungen in einer gewünschten Relativposition zum ersten Tragelement bzw. dessen Führungsaufnahme festlegbar bzw. arretierbar sind.

Alternativ oder kumulativ kann das erste Tragelement weitere erste Führungselemente aufweisen, beispielweise weitere Führungsaufnahmen und/oder Führungszapfen, um über eines oder mehrere erste Führungssysteme bzw. zweite Führungssysteme eine geführt verschiebbare Verbindung mit zweiten Tragelementen, insbesondere auf vorgenannte Weise, herzustellen.

Für eine flexible Handhabung hat es sich bewährt, wenn das erste Tragelement mehrere Führungsaufnahmen, welche insbesondere an unterschiedlichen, insbesondere einander gegenüberliegenden, Seiten des ersten Tragelementes angeordnet sind, aufweist, um eine geführt verschiebbare Verbindung bzw. einen Verschiebezustand mit ein oder mehreren zur Führungsaufnahme korrespondieren Führungszapfen herzustellen.

Es versteht sich, dass es zweckmäßig ist, wenn ein oder mehrere zweite Tragelemente mit weiteren Koppelstücken auf vorgenannte Weise mit einem oder mehreren weiteren ersten Tragelementen verbindbar bzw. verbunden sind.

Auf diese Weise können je nach Anwendungsfall ein erstes Tragelement auf flexible Weise mit mehreren zweiten Tragelementen verbunden werden, wobei die erfindungsgemäß vorgesehene Verschiebbarkeit zwischen dem ersten Tragelement und den jeweiligen zweiten Tragelementen ein einfaches, praktikables, aufwandsarmes relatives Positionieren der Tragelemente zueinander ermöglicht, sodass die Tragelementkonstruktion spannungsarm und mit hoher Fehlertoleranz errichtet werden kann.

Mit Vorteil ist ein Tragelementverbund vorgesehen, wobei der Tragelementverbund mehrere miteinander verbundene erfindungsgemäße Tragelementkonstruktionen umfasst. Entsprechend vorgenannter Merkmale und Wirkungen weist auch ein Tragelementverbund, welcher mit mehreren, insbesondere vorgenannten, Tragelementkonstruktionen gebildet ist, eine hohe Praktikabilität und Sicherheit auf.

Günstig ist es, wenn die mehreren Tragelementkonstruktionen miteinander verbunden sind, indem jeweils zumindest ein Tragelement einer ersten Tragelementkonstruktion und zumindest ein Tragelement einer zweiten Tragelementkonstruktion eine weitere Tragelementkonstruktion bilden. Dadurch kann flexibel je nach Anwendungsfall ein Baukastensystem bzw. ein modulares System, umfassend eine Mehrzahl von, insbesondere flexibel kombinierbaren, Tragelementkonstruktionen errichtet werden, wobei die vorteilhaften Wirkungen einer einzelnen Tragelementkonstruktion in analoger Weise auch für einen Tragelementverbund erhalten bleiben.

Mit Vorteil ist ein Geländer, insbesondere ein Balkongeländer, vorgeschlagen, wobei das Geländer bzw. das Balkongeländer mit mehreren miteinander verbundenen Geländertragelementen gebildet ist, dadurch gekennzeichnet, dass die Geländertragelemente eine erfindungsgemäße Tragelementkonstruktion bzw. einen erfindungsgemäßen Tragelementverbund bilden. Auf diese Weise bzw. dadurch, dass die erfindungsgemäße Tragelementkonstruktion bzw. der erfindungsgemäße Tragelementverbund zur Errichtung eines Geländers verwendet wird, kann ein Geländer mit hoher Praktikabilität und Sicherheit errichtet werden. Entsprechend vorgenannter Merkmale und Wirkungen einer erfindungsgemäßen Tragelementkonstruktion bzw. eines erfindungsgemäßen Tragelementverbundes kann das Geländer mit hoher Praktikabilität, einfacher Handhabbarkeit und Sicherheit errichtet werden. Indem die Geländertragelemente formschlüssig und relativ zueinander verschiebbar verbindbar sind, kann eine erste Positionierung der Geländertragelemente relativ zueinander mit geringerer Positionsgenauigkeit und höherer Fehlertoleranz durchgeführt werden, da eine exakte Justage der Balkontragelemente in deren Endpositionen erst sukzessive und/oder zu einem späteren Zeitpunkt im Rahmen einer Errichtung des Geländers durchführbar ist bzw. Positionsfehler durch Nachjustierung wieder ausgeglichen werden können. Vorteilhaft sind auf diese Weise mechanische Spannungen in der Geländertragelementkonstruktion reduzierbar. Im Besonderen kann auf eine Verwendung von üblichen Verbindungsmitteln wie Schrauben und Nieten, welche in der Regel eine exakte Positionierung von Bohrlöchern erfordern, in hohem Maße verzichtet werden. Auf diese Weise ist ermöglicht, dass das Balkongeländer auch von einem Laien errichtet werden kann und eine üblicherweise aufwendige und kostenintensive Beauftragung eines Professionisten für eine Errichtung des Geländers vermeidbar ist. Vorgenanntes gilt in besonderem Ausmaß, wenn das Geländer als Balkongeländer ausgebildet ist, zumal bei einem Balkongeländer Aspekten einer Sicherheit, Robustheit und/oder Praktikabilität besondere Wichtigkeit zukommt.

Zweckmäßig können dabei Tragelemente des Geländers bzw. Geländertragelemente in Form von, üblicherweise vertikal ausgerichteten, Säulen, üblicherweise horizontal ausgerichteten, Geländergurten, welche die Säulen verbinden, Geländerstäben, welche mehrere Geländergurte miteinander verbinden, und/oder Handläufen, welche eine obere Begrenzung des Geländers bilden, ausgebildet sein.

Bewährt hat es sich, wenn das Geländer, insbesondere Balkongeländer, zumindest zwei voneinander beabstandete Säulen aufweist, welche mit einem oder mehreren Geländergurten, in der Regel in einer Richtung quer, häufig orthogonal, zu Längsachsen der Säulen, miteinander verbunden sind, wobei die Säulen jeweils mit einem ersten Tragelement und die Geländergurte jeweils mit einem zweiten Tragelement gebildet sind, wobei die ersten Tragelemente und zweiten Tragelemente jeweils eine Tragelementkonstruktion bilden. Dadurch ist ein Geländer geschaffen, welches auf praktikable Weise und mit hoher Stabilität errichtbar und ausbildbar ist.

Eine hohe Praktikabilität ist erreichbar, wenn die Geländergurte über dasselbe Koppelstück mit der jeweiligen Säule, insbesondere auf vorgenannte Weise, verbindbar bzw. verbunden sind. Im Besonderen können auf diese Weise die Geländergurte besonders einfach mit einem vorgegebenen Abstand und/oder parallel zueinander ausgerichtet mit den Säulen verbunden werden. Für eine hohe Zeiteffizienz bei einem Aufbau ist es dann günstig, wenn wie vorgenannt beschrieben in einer Richtung orthogonal zur Verschieberichtung keine formschlüssige Verbindung zwischen dem Koppelstück und dem ersten bzw. jeweiligen zweiten Tragelement gegeben ist. Entsprechend ist es dann für eine hohe Robustheit zweckmäßig, wenn eine vorgenannte deaktivierbare Blockiervorrichtung vorhanden ist, um ein geführtes Verschieben des Koppelstückes relativ zum jeweiligen anderen Tragelement in zumindest einer der Verschieberichtungen zu blockieren. Für eine einfache Handhabbarkeit ist es günstig, wenn das Koppelstück als Koppelstückstab ausgebildet ist, wobei eine Längsseite des Koppelstückstabes eines der zweiten Führungselemente und die Endstücke des Koppelstückstabes jeweils das andere zweite Führungselement bilden. Vorzugsweise sind die zweiten Führungselemente dabei als Führungszapfen ausgebildet.

Günstig ist es, wenn die Säule wie, insbesondere vorstehend, beschrieben mit einer Vertiefung mit mehreren Führungsaufnahmen, bevorzugt einer in Tiefenrichtung der Vertiefung vorgelagerten Führungsaufnahme und einer dieser in Tiefenrichtung nachgelagerten Führungsaufnahme, ausgebildet ist, wobei üblicherweise die nachgelagerte Führungsaufnahme Begrenzungselemente aufweist, welche insbesondere die beiden Führungsaufnahmen voneinander separieren. Dadurch kann wie vorstehend beschrieben, ein zweites Tragelement, insbesondere Geländergurt, über ein Koppelstück, dessen Führungszapfensegment mit den Begrenzungselementen hintergriffen ist, oder alternativ nicht hintergriffen ist, mit der Säule formschlüssig verschiebbar verbunden sein. Insbesondere abhängig davon, ob das Koppelstück bzw. dessen Führungszapfensegment in die vorgelagerte oder nachgelagerte Führungsaufnahmen eingefügt ist und/oder abhängig von der Ausgestaltung bzw. Form des Koppelstückes bzw. dessen Führungszapfensegmentes. In analoger Weise können entsprechend Säulen und/oder Geländergurte bzw. weitere erste bzw. zweite Tragelemente des Geländers ausgebildet sein. Als besonders praktikabel hat es sich erwiesen, wenn ein oder mehrere Geländergurte derart mit der jeweiligen Säule verbunden sind, dass im Verschiebezustand ein Führungszapfensegment des jeweiligen Koppelstückes nicht von Begrenzungselementen der, insbesondere nachgelagerten, Führungsaufnahme der Säule hintergriffen ist bzw. derart ausgebildet ist, dass im Verschiebezustand in einer Richtung orthogonal zur Verschieberichtung, insbesondere entgegen einer Tiefenrichtung der Vertiefung, keine formschlüssige Verbindung zwischen dem Koppelstück bzw. dessen Führungszapfen und der, insbesondere nachgelagerten, Führungsaufnahme der Säule gegeben ist, sodass das Koppelstück durch Bewegen des Koppelstückes orthogonal zur Verschieberichtung von der Säule lösbar ist. Dies ermöglicht ein besonders einfaches Justieren bzw. Assemblieren des Geländers. Hierzu kann das Führungszapfensegment, insbesondere je nach konkreter Form des Führungszapfensegmentes, im Verschiebezustand in die vorgelagerte oder nachgelagerte Führungsaufnahme eingefügt sein.

Hierzu ist es weiter zweckmäßig, wenn die Geländergurte mit einem oder mehreren Geländerstäben, in der Regel in einer Richtung quer, insbesondere orthogonal, zur Längsachse der Geländergurte und quer, insbesondere orthogonal, zur Längsachse der Säulen, miteinander verbunden sind, wobei die Geländerstäbe als weitere erste Tragelemente ausgebildet sind, welche jeweils mit einem oder mehreren Geländergurten eine Tragelementkonstruktion bilden.

Eine hohe Vielseitigkeit des Geländers ist erreichbar, wenn Geländergurte und/oder Geländerstäbe ein oder mehrere Abdeckelemente mit Halteeinrichtungen aufweisen, um ein Flächenelement als Durchgangsbegrenzung bzw. als Feldfüllung, üblicherweise in Form einer Platte, zwischen den Geländergurten bzw. Geländerstäben zu fixieren. Das Flächenelement bzw. die Feldfüllung ist üblicherweise mit Glas, Metall oder Kunststoff und meist als Platte ausgebildet.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 eine schematische Darstellung eines Balkongeländers gebildet mit mehreren Tragelementkonstruktionen;
Fig. 2 eine schematische Darstellung eines Koppelstücks einer Tragelementkonstruktion;
Fig. 3 eine schematische Darstellung eines Tragelementes einer Tragelementkonstruktion;
Fig. 4 bis Fig. 7 schematische Darstellungen von verschiedenen Tragelementen in einem Querschnitt;
Fig. 8 bis Fig. 13 schematische Darstellungen von verschiedenen Koppelstücken;
Fig. 14 eine schematische Darstellung eines Abdeckelementes einer Tragelementkonstruktion;
Fig. 15 bis Fig. 17 schematische Darstellungen von verschiedenen Abdeckelementen in einem Querschnitt;
Fig. 18 und Fig. 19 schematische Darstellungen von Montagestützen für eine Tragelementkonstruktion;
Fig. 20 eine schematische Darstellung eines weiteren Balkongeländers gebildet mit mehreren Tragelementkonstruktionen;
Fig. 21 eine schematische Darstellung einer an einer Balkonbodenplatte angeordneten Halteschiene mit Montagestützen.

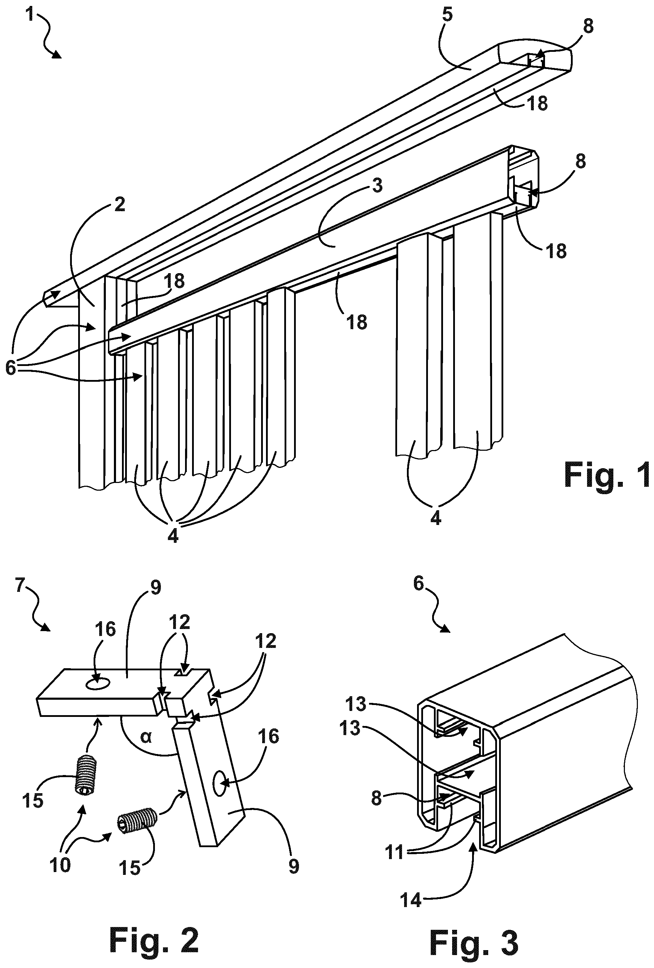

Fig. 1 zeigt eine schematische Darstellung eines Ausschnitts eines Balkongeländers 1, welches mit mehreren miteinander verbundenen Balkongeländertragelementen gebildet ist, wobei die Balkongeländertragelemente eine Tragelementkonstruktion bzw. mehrere miteinander verbundene Tragelementkonstruktionen bilden. Ersichtlich in Fig. 1 ist eine, insbesondere vertikal ausgerichtete, Säule 2, an welcher ein Geländergurt 3 dessen Längsachse quer, insbesondere orthogonal, zur Längsachse der Säule 2 ausgerichtet ist, angeordnet ist. Mit dem Geländergurt 3 sind mehrere voneinander beabstandete Geländerstäbe 4 verbunden, deren Längsachsen quer, insbesondere orthogonal, zur Längsachse des Geländergurtes 3, bevorzugt parallel zur Längsachse der Säule 2 oder zu einer mit der Säule 2 und dem Geländergurt 3 definierten Ebene, ausgerichtet sind. An einem oberen Ende der Säule 2 parallel zum Geländergurt 3 ausgerichtet ist ein Handlauf 5 angeordnet. Die Säule 2, der Geländergurt 3 und die Geländerstäbe 4 sind jeweils als Tragelement 6 ausgebildet, wobei jeweils zwei miteinander verbundene Tragelemente 6 ein erstes und zweites Tragelement 6 einer Tragelementkonstruktion bilden. Dabei sind jeweils zwei Tragelemente 6 mit einem Koppelstück 7 miteinander verbunden, wobei jeweils zwischen Tragelement 6 und Koppelstück 7 ein Führungssystem vorhanden ist, welches das Tragelement 6 und das Koppelstück 7 formschlüssig derart verbindet, dass das jeweilige Tragelement 6 relativ zum Koppelstück 7 geführt verschiebbar ist. Das jeweilige Führungssystem ist dabei mit einer Führungsaufnahme 8 des Tragelementes 6 und einem Führungszapfen 9 des Koppelstückes 7 gebildet, um durch Einfügen des Führungszapfens 9 in die Führungsaufnahme 8 eine geführt verschiebbare Verbindung zwischen Tragelement 6 und Koppelstück 7 zu bilden. Auf diese Weise können beide mit dem Koppelstück 7 verbundenen Tragelemente 6 relativ zum diese verbindenden Koppelstück 7 verschoben werden, um eine relative Position zwischen den beiden Tragelementen 6 einzustellen. Zur Festlegung bzw. Arretierung eines Tragelementes 6 relativ zum Koppelstück 7 ist jeweils eine Arretierungsvorrichtung 10 vorgesehen, welche vorzugsweise eine Pressverbindung zwischen Koppelstück 7 und Tragelement 6 bewirkt.

Wie in Fig. 1 oder Fig. 3 ersichtlich, ist die Führungsaufnahme 8 des Tragelementes 6 dabei vorzugsweise mit einem Kanal bzw. einer Nut gebildet, dessen Längsachse bevorzugt entlang einer Längserstreckung des Tragelementes 6 ausgerichtet ist, um eine Verschiebbarkeit eines in die Führungsaufnahme 8 eingefügten Führungszapfens 9 entlang der Längserstreckung des Tragelementes 6 zu ermöglichen. Um eine formschlüssig geführt verschiebbare Verbindung zwischen der Führungsaufnahmen 8 und dem Führungszapfen 9 herzustellen, weist die Führungsaufnahme 8 mehrere Begrenzungselemente 11 auf, welche jeweils ein Führungszapfensegment eines in die Führungsaufnahme 8 eingefügten Führungszapfens 9 formschlüssig hintergreifen. Zweckmäßig ist hierzu vorgesehen, dass der Führungszapfen 9 einen variierenden Außendurchmesser in Form von Begrenzungselementaufnahmen 12, in welche ein Begrenzungselement 11 formschlüssig einfügbar ist, aufweist, um eine geführt verschiebbare Verbindung zwischen der Führungsaufnahme 8 und dem Führungszapfen 9 herzustellen. Die Begrenzungselemente 11 sind bevorzugt mit bzw. als Schienen ausgebildet, welche sich insbesondere entlang einer Längsachse der Führungsaufnahme 8 erstrecken, ersichtlich in Fig. 3. Auf diese Weise ist ermöglicht, dass in eine Führungsaufnahme 8 Führungszapfen 9 eines oder auch mehrerer Koppelstücke 7 einfügbar und in der Führungsaufnahme 8 relativ zur Führungsaufnahme 8 entlang einer Längserstreckung der Führungsaufnahmen 8 verschiebbar sind, und damit auch mit den Koppelstücken 7 verbundene weitere Tragelemente 6. Das Koppelstück 7 weist in der Regel zwei Führungszapfen 9 auf, um mit jeweils einem der Führungszapfen 9 eine formschlüssig geführt verschiebbare Verbindung, entsprechend vorgenannter Ausführung, mit einer Führungsaufnahme 8 eines Tragelementes 6 herzustellen. Sind auf diese Weise zwei Tragelemente 6 mit einem Koppelstück 7 verbunden, können die beiden Tragelemente 6 entlang von durch deren Führungsaufnahmen 8 vorgegebenen Führungsrichtungen bzw. Verschieberichtungen relativ zueinander geführt verschoben werden, sodass deren relative Position zueinander flexibel einstellbar ist.

Auf diese Weise sind die in Fig. 1 gezeigten jeweils als Tragelement 6 ausgeführte Säule 2, der Geländergurt 3, die Geländerstäbe 4 sowie der Handlauf 5 jeweils untereinander mit Koppelstücken 7 auf vorgenannte Weise verbunden, sodass deren relative Positionierung zueinander flexibel geändert bzw. justiert werden kann.

Fig. 2 zeigt eine schematische Darstellung eines Koppelstückes 7 einer Tragelementkonstruktion, insbesondere einer Tragelementkonstruktion gemäß Fig. 1. Das Koppelstück 7 weist miteinander verbundene Schenkel auf, wobei jeweils einer der Schenkel einen Führungszapfen 9 für eine formschlüssige Verbindung mit einer Führungsaufnahme 8 eines Tragelementes 6 bildet. Zweckmäßig sind die Schenkel bzw. deren Längsachsen winklig, insbesondere orthogonal, zueinander angeordnet, um korrespondierend dazu mit den jeweiligen Schenkeln verbundene Tragelemente 6 winklig anzuordnen.

Weiter in Fig. 2 ersichtlich sind Begrenzungselementaufnahmen 12 der Führungszapfen 9, in welche bei einem Einfügen der Führungszapfen 9 in eine Führungsaufnahme 8 zur Herstellung einer formschlüssigen Verbindung Begrenzungselemente 11 der Führungsaufnahmen 8 einfügbar sind. Zweckmäßig sind zwei Begrenzungselementaufnahmen 12 an gegenüberliegenden Seiten des Führungszapfens 9 vorgesehen, wodurch ein Führungszapfensegment gebildet ist, welches zur Herstellung der formschlüssigen Verbindung von den Begrenzungselementen 11 hintergreifbar ist.

Um in einem Verschiebezustand, in welchem ein Führungszapfen 9 geführt verschiebbar in eine Führungsaufnahme 8 eingefügt ist, den Führungszapfen 9 an dessen Position relativ zur Führungsaufnahme 8 festzulegen bzw. zu arretieren, ist jeweils eine Arretierungsvorrichtung 10 vorgesehen. Wie in Fig. 2 ersichtlich, kann die Arretierungsvorrichtung 10 mit einem als Schraube ausgebildeten Presselement 15 gebildet sein, welche in ein am Schenkel bzw. Führungszapfensegment angeordnetes den Schenkel bzw. das Führungszapfensegment durchdringendes Bohrloch 16 einfügbar und durch das Bohrloch 16 durchführbar ist, um zur Arretierung im Verschiebezustand mit Durchführen des Presselementes 15 durch das Bohrloch 16 eine Pressverbindung des Presselementes 15 mit einer Presselementgegenfläche der Führungsaufnahme 8 herzustellen. Üblicherweise erfolgt dies derart, dass ein Abschnitt des Presselementes 15 einen Bohrlochausgang des Bohrloches 16 überragend gegen die Presselementgegenfläche gepresst wird. Das Durchführen erfolgt üblicherweise mit Einschrauben des Presselementes 15 in das Bohrloch 16, vorzugsweise in ein Gewinde des Bohrloches 16. Es versteht sich, dass die Arretierungsvorrichtung 10 auch mit mehreren solcher Schrauben bzw. Bohrlöcher gebildet sein kann. Zweckmäßig ist es, wenn jeder der Schenkel bzw. Führungszapfen 9 eines Koppelstückes 7 mit jeweils einer Arretierungsvorrichtung 10 arretierbar ist.

Fig. 3 zeigt eine schematische Darstellung eines Ausschnitts eines Tragelementes 6 einer Tragelementkonstruktion, insbesondere eines Tragelementes 6 der Fig. 1. Ersichtlich ist die mit einem Kanal bzw. einer Nut gebildete Führungsaufnahme 8, in welche ein Führungszapfen 9 einführbar ist, sodass dieser in der Führungsaufnahme 8 formschlüssig verschiebbar ist.

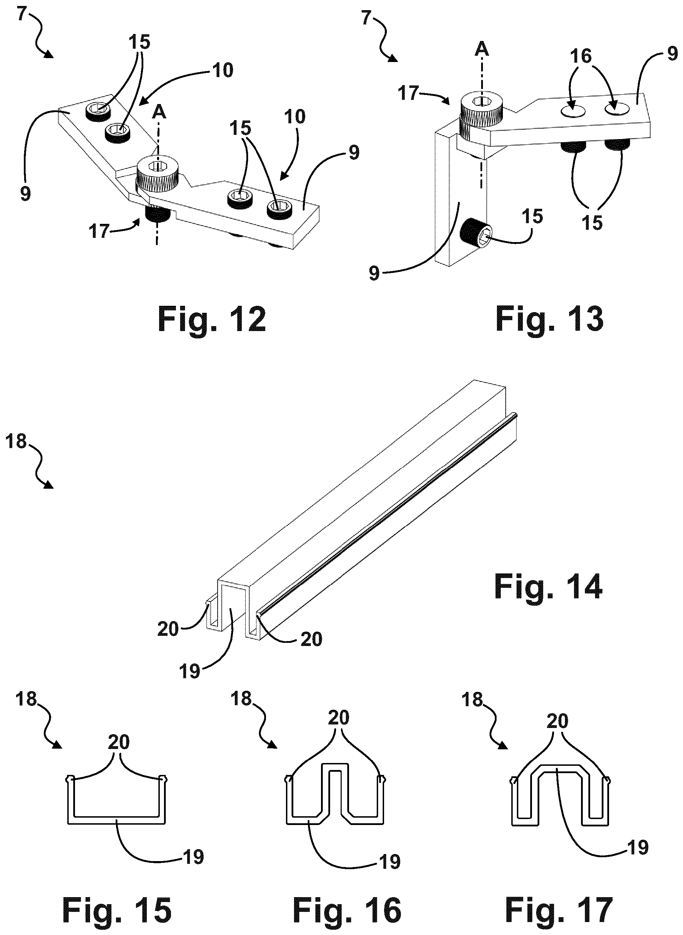

Um eine hohe Robustheit und Sicherheit zu erreichen, ist vorgesehen, dass die Führungsaufnahme 8 vertieft im Tragelement 6 bzw. in einer als Rinne ausgebildeten Vertiefung 14 des Tragelementes 6 angeordnet ist. Wie in Fig. 3 ersichtlich kann der Kanal bzw. die Nut der Führungsaufnahme 8 als Teil der Vertiefung 14 ausgebildet sein. Zweckmäßig können ein oder mehrere Abdeckelemente 18, dargestellt in Fig. 14 bis Fig. 17, vorhanden sein, welche formschlüssig und/oder kraftschlüssig derart mit dem Tragelement 6 verbindbar sind, dass diese eine Öffnung der Vertiefung 14 bzw. die in der Vertiefung 14 angeordnete Führungsaufnahme 8 in Tiefenrichtungssicht bevorzugt gänzlich verdecken, ersichtlich in Fig. 1.

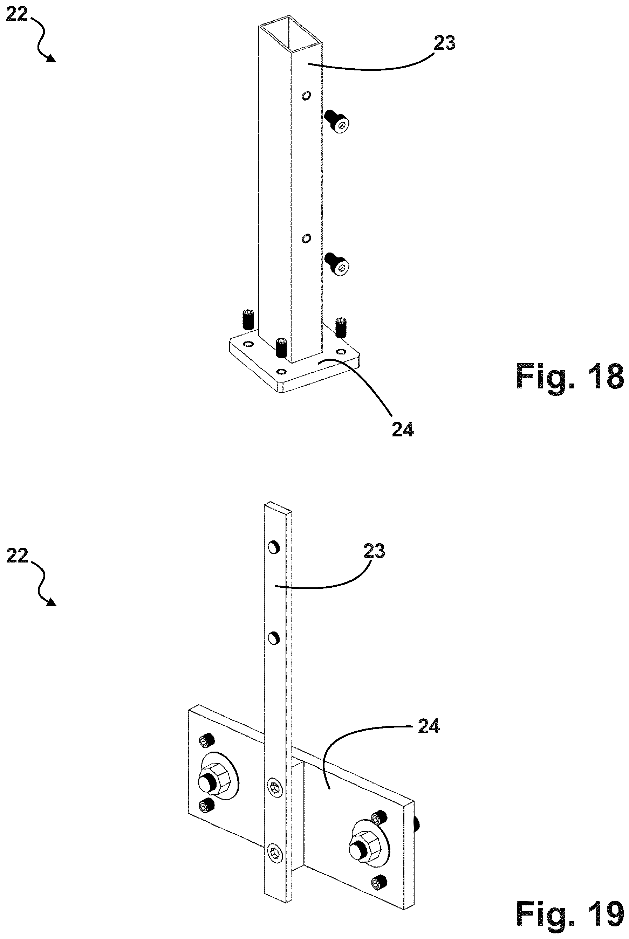

Weiter in Fig. 3 ersichtlich ist, dass das Tragelement 6 vorzugsweise zwei Montagestützenaufnahmen 13 aufweist, in welche jeweils eine zur Montagestützenaufnahme 13 formkorrespondierende Montagestützenverbindeschiene 23 einer Montagestütze 22 einfügbar ist, um das Tragelement 6 formschlüssig und/oder kraftschlüssig mit der Montagestütze 22 zu verbinden. Beispielhafte zu den Montagestützenaufnahmen 13 korrespondierende Montagestützen 22 sind in Fig. 18 und Fig. 19 dargestellt. Das Tragelement 6 weist eine zentrisch angeordnete Montagestützenaufnahme 13, insbesondere für ein Verbinden mit der Montagestütze 22 gemäß Fig. 18, und eine exzentrisch im Tragelement 6 angeordnete Montagestützenaufnahme 13, insbesondere für ein Verbinden mit der Montagestütze 22 gemäß Fig. 19, auf, welche jeweils mit einem Kanal in Längsrichtung des Tragelementes 6 gebildet sind. Dadurch kann das Tragelement 6 je nach konkreten Anforderungen an einer durch eine die Montagestütze 22 vorgegebenen Position oder mit einem Versatz zu dieser angeordnet werden.

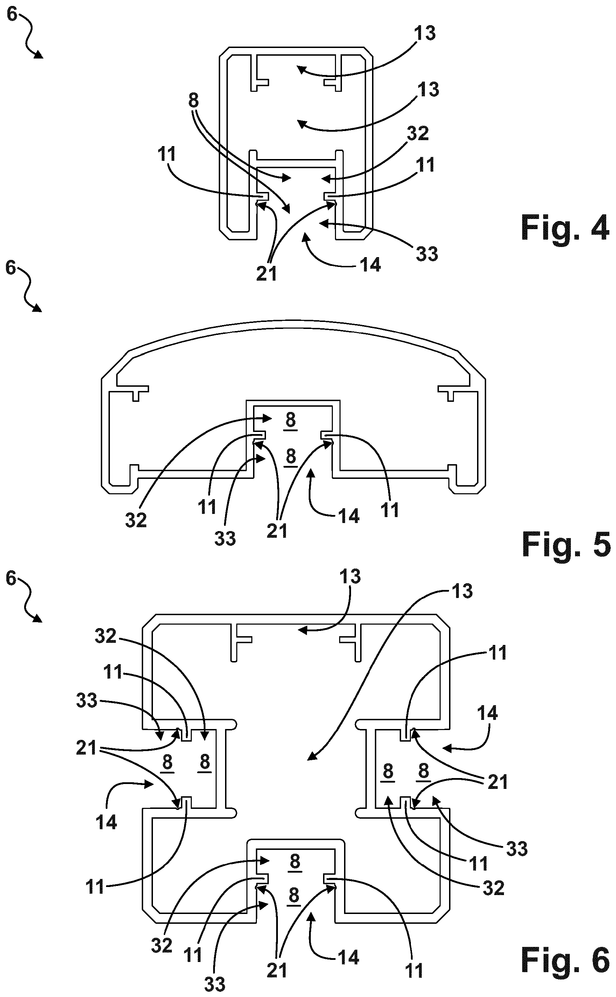

Fig. 4 bis Fig. 7 zeigen schematische Darstellungen von verschiedenen Tragelementen 6, insbesondere Tragelementen 6 der Fig. 1, in einem Querschnitt. Fig. 4 zeigt das Tragelement 6 der Fig. 3 in einem Querschnitt. In Fig. 4 ist ersichtlich, dass das Tragelement 6 Befestigungsstiftaufnahmen aufweist, welche formkorrespondierend zu Befestigungsstiften 20 am Abdeckelement 18 ausgebildet sind, um eine formschlüssige bzw. reibschlüssige Verbindung zwischen dem Tragelement 6 und dem Abdeckelement 18 herzustellen, indem die Befestigungsstifte 20 in die Befestigungsstiftaufnahmen eingefügt werden. Die Befestigungsstiftaufnahmen sind als Rinnen mit einer Längserstreckung entlang einer Längserstreckung der Vertiefung 14 bzw. einer Längserstreckung der Führungsaufnahme 8 ausgebildet, wodurch das Abdeckelement 18 je nach Anwendungsbedingungen flexibel entlang der Längserstreckung positioniert werden kann.

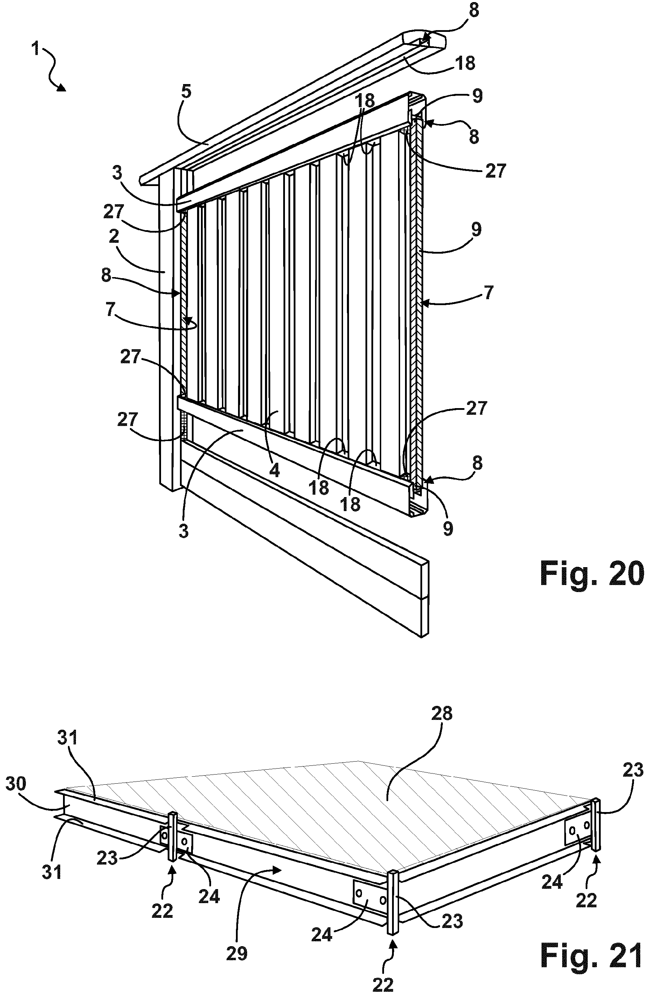

In Fig. 4 ist dargestellt, dass das Tragelement 6 in der Vertiefung 14 in Tiefenrichtung hintereinander zwei Führungsaufnahmen 8 aufweisen kann, bezeichnet als vorgelagerte Führungsaufnahme 33 und nachgelagerte Führungsaufnahme 32. Dies ist praktikabel umgesetzt indem die Begrenzungselemente 11 einen in Tiefenrichtung der Vertiefung 14 den Begrenzungselementen 11 nachgeordneten Vertiefungsbereich zur Bildung der nachgelagerten Führungsaufnahme 32 und einen in Tiefenrichtung den Begrenzungselementen 11 vorgeordneten Vertiefungsbereich zur Bildung der vorgelagerten Führungsaufnahme 33 innerhalb der Vertiefung definieren. Die nachgelagerte Führungsaufnahme 33 ist geeignet, um im Verschiebezustand ein in dieses eingefügtes Führungszapfensegment mit den Begrenzungselementen 11 zu hintergreifen. Die vorgelagerte Führungsaufnahme 33 ist geeignet im Verschiebezustand eine Verbindung bzw. Kopplung zwischen Koppelstück 7 und Tragelement 6 ohne Hintergreifen eines in die vorgelagerte Führungsaufnahme 33 eingefügten Führungszapfensegmentes zu bilden bzw. derart auszubilden, dass in einer Richtung orthogonal zur Verschieberichtung bzw. entgegen der Tiefenrichtung der Vertiefung 14 keine formschlüssige Verbindung zwischen dem Tragelement 6 und dem Koppelstück 7 gegeben ist, exemplarisch dargestellt in Fig. 20.

Es versteht sich, dass grundsätzlich die hier gezeigten Vertiefungen 14 auch jeweils nur mit einer einzigen Führungsaufnahme 8, beispielsweise der vorgelagerten Führungsaufnahme 33 oder nachgelagerte Führungsaufnahme 32, ausgebildet sein können, also insbesondere mit Begrenzungselementen 11 oder ohne solche.

Ein Tragelement 6 mit Ausgestaltung gemäß Fig. 3 bzw. Fig. 4 hat sich insbesondere zur Bildung der Säule 2, des Geländergurtes oder auch eines oder mehrerer Geländerstäbe 4 als praktikabel bewährt.

Fig. 5 zeigt ein weiteres Tragelement 6 in einem Querschnitt mit einer Führungsaufnahme 8 bzw. Vertiefung 14 gemäß Fig. 3 bzw. Fig. 4. Das Tragelement 6 der Fig. 5 kann grundsätzlich die gleichen Merkmale und dazu korrespondierenden Wirkungen wie das Tragelement 6 der Fig. 3 bzw. Fig. 4 aufweisen. Das Tragelement 6 der Fig. 5 weist an einer Seite des Tragelementes 6, welche einer Seite mit der Führungsaufnahme 8 bzw. Vertiefung 14 gegenüberliegt, eine gewölbte Außenfläche auf, um in einem Einsatzzustand ein Führen einer Hand eines Benutzers mit der Außenfläche bzw. ein Festhalten der Außenfläche durch einen Benutzer zu erleichtern. Vorzugsweise weist insbesondere der Handlauf 5 eine Ausgestaltung gemäß Fig. 5 auf.

Fig. 6 zeigt ein weiteres Tragelement 6 in einem Querschnitt, aufweisend mehrere in Vertiefungen 14 angeordnete Führungsaufnahmen 8. Das Tragelement 6 der Fig. 6, insbesondere dessen Führungsaufnahmen 8 und Vertiefungen 14, kann grundsätzlich die gleichen Merkmale und dazu korrespondierenden Wirkungen wie die Tragelemente 6 der Fig. 3 bis Fig. 5 und deren Führungsaufnahmen 8 und Vertiefungen 14 aufweisen. Im Unterschied zu den Tragelementen 6 der Fig. 3 bis Fig. 5 weist das Tragelement 6 der Fig. 6 mehrere Führungsaufnahmen 8 auf, welche jeweils in einer Vertiefung 14 angeordnet sind. Das Tragelement 6 der Fig. 6 weist einen polygonalen, insbesondere vierseitigen, Querschnitt auf. Grundsätzlich kann, insbesondere in einem Querschnitt des Tragelementes 6, an mehreren, insbesondere jeder, der Seiten des Tragelementes 6 eine in einer Vertiefung 14 angeordnete Führungsaufnahme 8 vorhanden sein. Wie in Fig. 6 ersichtlich kann es günstig sein, wenn das Tragelement 6 in einem Querschnitt zwischen einer der Seiten und einem Zentrum, insbesondere dem geometrischen Schwerpunkt, des Tragelementes 6 angeordnet eine Montagestützenaufnahme 13 aufweist und an den übrigen Seiten des Tragelementes 6 eine in einer Vertiefung 14 angeordnete Führungsaufnahme 8 positioniert ist.

Fig. 7 zeigt eine schematische Darstellung eines Tragelementes 6 in einem Querschnitt, aufweisend zwei in Vertiefungen angeordnete Führungsaufnahmen 8 einander gegenüberliegend am Tragelement 6 angeordnet. Das Tragelement 6 der Fig. 7 kann grundsätzlich die gleichen Merkmale und dazu korrespondierenden Wirkungen wie die Tragelemente 6 der Fig. 3 bis Fig. 6 aufweisen. Ein Tragelement 6 mit Ausgestaltung gemäß Fig. 7 hat sich insbesondere zur Bildung eines oder mehrerer Geländerstäbe 4 als praktikabel bewährt.

Fig. 8 bis Fig. 13 zeigen schematische Darstellungen von verschiedenen Koppelstücken 7. Die einzelnen Koppelstücke 7 können grundsätzlich die gleichen Merkmale und dazu korrespondierenden Wirkungen wie das Koppelstück 7 der Fig. 2 aufweisen. Die Koppelstücke 7 sind mit Schenkeln mit einem rechteckigen Querschnitt gebildet. Fig. 8 zeigt ein Koppelstück 7, welches eine einzige Blockiervorrichtung aufweist und somit ausserhalb der Erfindung liegt und welches nur mit einem Schenkel gebildet ist. Ersichtlich ist außerdem eine Arretierungsvorrichtung 10, gebildet mit einer Wurmschraube als Presselement 15. Fig. 9 und Fig. 10 zeigen Koppelstücke 7, welche mit zwei miteinander verbundenen Schenkeln gebildet sind, deren Längsachsen einen orthogonalen Schenkelwinkel α zueinander bilden. Das Koppelstück 7 der Fig. 10 entspricht dem Koppelstück 7 der Fig. 2. Jeder der Schenkel weist eine Arretierungsvorrichtung 10, gebildet mit jeweils einer Wurmschraube als Presselement 15, auf. Es versteht sich, dass die Arretierungsvorrichtung 10 auch mehrere derartige Wurmschrauben aufweisen kann. Die beiden Schenkel weisen jeweils eine quaderähnliche Form auf, welche mit in Längsrichtung der Schenkel erstreckenden Deckflächen sowie diese winklig, insbesondere orthogonal, in Längsrichtung der Schenkel verbindenden Seitenflächen ausgebildet ist, wobei eine Deckfläche eine größere Fläche als eine Seitenfläche aufweist, bevorzugt die Deckfläche eine mehr als doppelt so große Fläche wie die Seitenfläche aufweist. Die Schenkel der Fig. 9 sind derart miteinander verbunden, dass die jeweiligen Seitenflächen winklig, insbesondere orthogonal, zueinander ausgerichtet sind. Die Schenkel der Fig. 10 sind derart miteinander verbunden, dass die jeweiligen Deckflächen winklig, insbesondere orthogonal, zueinander ausgerichtet sind. Fig. 11 bis Fig. 13 zeigen Koppelstücke 7 deren Schenkel mit einem Gelenk 17 miteinander verbunden sind, sodass die Schenkel relativ zueinander um eine Drehachse A verschwenkbar sind. Das Koppelstück 7 der Fig. 11 entspricht im Wesentlichen dem Koppelstück 7 der Fig. 10, wobei ein Schenkelwinkel α zwischen den jeweiligen Deckflächen der Schenkel mit dem Gelenk 17 variierbar ist. Das Koppelstück 7 der Fig. 12 entspricht im Wesentlichen dem Koppelstück 7 der Fig. 9, wobei ein Schenkelwinkel α zwischen den jeweiligen Seitenflächen mit dem Gelenk 17 variierbar ist. Die Drehachsen A der Gelenke 17 der Fig. 11 und Fig. 12 sind im Wesentlichen orthogonal zu den Längsachsen der Schenkel ausgerichtet. Fig. 13 zeigt ein Koppelstück 7 mit einem Gelenk 17 dessen Drehachse A derart angeordnet ist, dass diese orthogonal zur Längsachse des einen Schenkels und parallel zur Längsachse des anderen Schenkels ausgerichtet ist. Die in Fig. 8 bis Fig. 13 gezeigten Koppelstücke 7 ermöglichen damit eine Vielzahl an Möglichkeiten, um zwei mit einem Koppelstück 7 verbundene Tragelemente 6 je nach Anwendungszweck und Auswahl einer Ausgestaltung des Koppelstücks 7 in einer gewünschten relativen Position zueinander anzuordnen.

Fig. 14 zeigt eine schematische Darstellung eines Abdeckelementes 18 einer Tragelementkonstruktion, um einen Öffnungsquerschnitt einer Vertiefung 14 mit dem Abdeckelement 18 zu verdecken. Das Abdeckelement 18 ist ausgebildet, in die Vertiefung 14 eingefügt und in dieser formschlüssig und/oder kraftschlüssig fixiert zu werden. Das Abdeckelement 18 ist mit einer Abdeckfläche 19 ausgebildet, welche in einem am Abdeckelement 18 angeordneten Zustand in Tiefenrichtung der Vertiefung 14 einen Öffnungsquerschnitt der Vertiefung 14 bzw. eine Vertiefungsbreite zumindest abschnittsweise, bevorzugt gänzlich, verdeckt, siehe hierzu auch Fig. 15. Zur Fixierung weist das Abdeckelement 18 zwei Befestigungsstifte 20 auf, welche in zu den Befestigungsstiften 20 formkorrespondierende Befestigungsstiftaufnahmen 21 am Tragelement 6 bzw. dessen Vertiefungswänden, ersichtlich in Fig. 3 bis Fig. 7, einfügbar sind. Die Befestigungsstifte 20 sind in einem Querschnitt des Abdeckelementes 18 an gegenüberliegende Seiten des Abdeckelementes 18 bzw. der Abdeckfläche 19 angeordnet. Weiter ist in Fig. 14 ersichtlich, dass die Abdeckfläche 19 derart geformt ist, dass diese eine Furche bildet, in welche ein Rand eines Flächenelementes einfügbar ist, um dieses am Tragelement 6 bzw. zwischen dem Tragelement 6 und einem weiteren Tragelement 6 zu fixieren.

Fig. 15 bis Fig. 17 zeigen schematische Darstellungen von verschiedenen Abdeckelementen 18 in einem Querschnitt. Die Abdeckelemente 18 sind im Wesentlichen entsprechend dem Abdeckelement 18 der Fig. 14 und dessen Merkmalen und Wirkungen ausgebildet und unterscheiden sich lediglich in der Form der Abdeckfläche 19. Fig. 15 zeigt ein Abdeckelement 18 dessen Abdeckfläche 19 als Ebene ausgebildet ist. Dieses dient insbesondere einem robusten und sicheren Abdecken des Vertiefungsquerschnittes. Eine Furche zur Aufnahme eines Flächenelementes ist dabei nicht vorgesehen. Fig. 16 und Fig. 17 zeigen Abdeckelemente 18 deren Abdeckflächen 19 Furchen aufweisen, welche sich in einer Breite der Furche unterscheiden, um Flächenelemente mit unterschiedlichen Dicken aufzunehmen.

Fig. 18 und Fig. 19 zeigen schematische Darstellungen von Montagestützen 22 für eine Tragelementkonstruktion. Die Montagestützen 22 dienen einer Befestigung eines Tragelementes 6 bzw. einer Tragelementkonstruktion an einem Umgebungselement, wie beispielsweise einem Boden, etwa einem Balkonboden bzw. einer Balkonbodenplatte 28, oder einer Wand. Eine Montagestütze 22 kann dabei einen Verankerungsfuß 24 als Verankerungseinrichtung zur Verankerung der Montagestütze 22 an einem Umgebungselement aufweisen, wobei der Verankerungsfuß 24 ausgebildet sein kann, die Montagestütze 22 an einer Umgebungsfläche zu verankern, welche quer, insbesondere orthogonal, zur Längsachse der Montagestütze 22 oder parallel zu dieser ausgebildet ist. Fig. 18 zeigt einen Verankerungsfuß 24, aufweisend eine quer, insbesondere orthogonal, zur Längsachse der Montagestütze 22 bzw. Montagestützenverbindungsschiene 23 angeordnete Montageplatte, um die Montageplatte kraftschlüssig, insbesondere mit Schraubverbindungen, mit einer im Wesentlichen parallel zur Montageplatte ausgerichteten Umgebungsfläche zu verankern. Analog ist in Fig. 19 die Montageplatte des Verankerungsfußes 24 parallel zur Längsachse der Montagestütze 22 angeordnet. Die Montagestützen 22 weisen jeweils eine Montagestützenverbindeschiene 23 auf, welche ausgebildet ist formschlüssig in eine zur Montagestützenverbindeschiene 23 formkorrespondierende Montagestützenaufnahme 13, ersichtlich beispielsweise in Fig. 3, eines Tragelementes 6 eingefügt zu werden, um die Montagestütze 22 formschlüssig und/oder kraftschlüssig mit dem Tragelement 6 zu verbinden.

Fig. 20 zeigt eine schematische Darstellung eines Ausschnittes eines weiteren Balkongeländers 1, welches mit mehreren miteinander verbundenen Balkongeländertragelementen gebildet ist, wobei die Balkongeländertragelemente eine Tragelementkonstruktion bzw. mehrere miteinander verbundene Tragelementkonstruktionen bilden. Das Balkongeländer 1 bzw. die Balkongeländertragelemente können dabei entsprechend dem Balkongeländer 1 bzw. den Tragelementkonstruktionen der Fig. 1 bzw. deren Merkmale ausgebildet sein und umgekehrt. Dies gilt entsprechend für die speziellen Ausgestaltungen der Fig. 3 bis Fig. 7 und deren Merkmalen. Ersichtlich in Fig. 20 ist eine, insbesondere vertikal, ausgerichtete Säule 2, an welcher beabstandet voneinander zwei Geländergurte 3, deren Längsachsen quer, insbesondere orthogonal, zur Längsachse der Säule 2 ausgerichtet sind, angeordnet sind, wobei Enden der Geländergurte 3 mit der Säule 2 verbunden sind. Eine weitere Säule 2 mit der die Geländergurte 3 an deren anderen Enden verbunden sind, ist zur besseren Darstellung und Ersichtlichmachung eines Verbindungsmechanismus zwischen Geländergurten 3 und Säulen 2 in Fig. 1 ausgelassen. Zwischen den Geländergurten 3 sind mehrere mit deren Längsachsen quer zu den Längsachsen der Geländergurte 3 ausgerichtete voneinander beabstandete Geländerstäbe 4 angeordnet, welche die Geländergurte 3 miteinander verbinden. Im Unterschied zum Balkongeländer 1 der Fig. 1 ist vorgesehen, dass die Geländergurte 3 mit den Säulen 2 über Koppelstücke 7 formschlüssig verbunden sind, wobei die beiden Geländergurte 3 mit jeweils einer der Säulen 2 über dasselbe Koppelstück 7, also ein gemeinsames Koppelstück 7, verbunden sind. Das Koppelstück 7 ist dabei als Koppelstückstab ausgebildet, wobei jeweils ein Endstück des Koppelstückstabes formschlüssig in jeweils eine Führungsaufnahme 8 der beiden Geländergurte 3 ragt und eine Längsseite des Koppelstückstabes in eine Führungsaufnahme 8 der jeweiligen Säule 2 formschlüssig einfügbar ist. Die Koppelstückstäbe sind in Fig. 1 mit schräger Schraffur darstellt. Die Endstücke des Koppelstückstabes bilden dabei Führungszapfen 9 bzw. Führungszapfensegmente, welche in die jeweilige Führungsaufnahme 8 der Geländergurte 3 formschlüssig eingefügt sind und die Längsseite des Koppelstückstabes bildet einen Führungszapfen 9, welcher in die Führungsaufnahme 8 der Säule 2 formschlüssig einfügbar bzw. eingefügt ist.

Ein weiterer Unterschied zum Balkongeländer 1 der Fig. 1 liegt darin, dass dabei das Koppelstück 7, insbesondere im Verschiebezustand, dabei derart in die Führungsaufnahme 8 der Säule 2 eingefügt ist, dass kein Hintergreifen des Führungszapfensegmentes des Koppelstückes 7 bzw. in einer Richtung entgegen der Tiefenrichtung der Vertiefung 14 der Säule 2 keine formschlüssige Verbindung zwischen der Führungsaufnahme 8 der Säule 2 und dem Führungszapfen 9 gegeben ist. Dies ist praktikabel umsetzbar, indem das mit der Längsseite des Koppelstückes 7 gebildete Führungszapfensegment in die in Tiefenrichtung der Vertiefung 14 vorgelagerte Führungsaufnahme 33 der Säule 2 eingefügt ist. Alternativ kann vorgesehen sein, dass eine Breite dieses Führungszapfensegmentes kleiner als eine Beabstandung der Begrenzungselemente 11 der nachgelagerten Führungsaufnahmen 32 der Säule 2 voneinander ist, um das Führungszapfensegment zwischen den Begrenzungselementen 11 hindurch in die nachgelagerte Führungsaufnahme 32 einzufügen, ohne dass das Führungszapfensegment dabei von den Begrenzungselementen 11 im Verschiebezustand hintergriffen ist.

Es versteht sich, dass diese beiden vorgenannten Unterschiede eines gemeinsamen Koppelstückes 7 und einer Verbindung bzw. Kopplung ohne Hintergreifen des Führungszapfensegmentes entgegen der Tiefenrichtung auch unabhängig voneinander bzw. jeweils nur einzeln vorliegen können.

In analoger Weise kann auch eine Verbindung des jeweiligen Führungszapfens 9 bzw. dessen Führungszapfensegmentes mit dem jeweiligen Geländergurt 3 ausgeführt sein, wobei insbesondere die Endstücke des Koppelstückstabes im jeweiligen Verschiebezustand in eine, insbesondere vorgelagerte Führungsaufnahme 33 oder nachgelagerte Führungsaufnahme 32 des jeweiligen Geländergurtes 3 eingefügt sind.

Die Kombination von gemeinsam verwendetem Koppelstück 7 zur Verbindung der Geländergurte 3 mit der jeweiligen Säule 2 und die Möglichkeit, das Koppelstück 7 ohne Hintergreifen dieses in die jeweilige Führungsaufnahme 8 aufwandsarm einzufügen, ermöglicht eine besonders hohe Praktikabilität bei der Errichtung des Balkongeländers 1.

Um ein Herausgleiten bzw. Lösen des Koppelstückstabes bzw. der Führungszapfen 9 aus der jeweiligen Führungsaufnahme 8 in einer Richtung orthogonal zur deren Verschieberichtung bzw. entgegen deren Tiefenrichtung zu verhindern - zumal diese nicht von Begrenzungselementen hintergriffen werden -, sind Blockierelemente 27 in die Führungsaufnahmen 8 der jeweiligen anderen Tragelemente 6 eingesetzt, welche ein geführtes Verschieben des in diese eingefügten Koppelstückstabes bzw. der jeweiligen Führungszapfen 9 in dieser Richtung blockieren. Die Blockierelemente 27 bilden dabei einen Anschlag, welcher ein geführtes Verschieben in der jeweiligen Führungsaufnahme 8 in einer Richtung blockiert, welches zu einem Herausgleiten bzw. Lösen des Führungszapfens 9 aus den jeweiligen anderen Führungsaufnahmen 8 führen würde. Die Blockierelemente 27 können dabei zudem analog vorgenannter Abdeckelemente 18 ausgebildet sein und damit gleichzeitig einen Abschnitt einer Öffnung einer jeweiligen Führungsaufnahme 8 verdecken. Wie in Fig. 20 ersichtlich sind Blockierelemente 27 sowohl in den Führungsaufnahmen 8 der Geländergurte 3 als auch in der Führungsaufnahme 8 der Säule 2 eingefügt, um ein geführtes Verschieben der Koppelstückstäbe in der gewünschten Position zu blockieren.

Fig. 21 zeigt eine schematische Darstellung einer an einer Balkonbodenplatte 28 angeordneten Halteschiene 29 mit Montagestützen 22. Die Montagestützen 22 können dabei entsprechend der Montagestütze 22 der Fig. 19 ausgebildet sein. Die Halteschiene 29 weist mehrere entlang deren Längserstreckung beabstandet voneinander angeordnete Montagestützen 22 auf, wobei Montagestützenverbindeschienen 23 der Montagestützen 22 orthogonal zur Längserstreckung der Halteschiene 29 ausgerichtet sind. Die Montagestützen 22 sind seitlich an der Halteschiene 29, üblicherweise außenseitig in Bezug auf den Balkon, positioniert. Damit können durch Montieren der Halteschiene 29 an einer Balkonbodenplatte 28 Montagestützen 22 zeiteffizient und mit vorgegebenem Abstand aufwandsarm an der Balkonbodenplatte 28 befestigt werden. Indem Säulen 2 eines Balkongeländers 1, insbesondere eines Balkongeländers 1 der Fig. 1 bzw. Fig. 20, mit den Montagestützenverbindeschienen 23 verbunden werden, kann ein Balkongeländer 1 mit hoher Praktikabilität errichtet werden. Die Halteschiene 29 weist zweckmäßig Spaltabdeckelemente 31 auf, welche von einem Basiskörper 30 der Halteschiene 29 montagestützenseitig abragen. Die Spaltabdeckelemente 31 weisen Einschnitte auf, wobei jeweils eine der Montagestützenverbindeschienen 23 in einem der Einschnitte angeordnet ist. Auf diese Weise kann ein zwischen errichtetem Balkongeländer 1 und Halteschiene 29 bzw. Balkongeländer 1 und Balkonbodenplatte 28 entstehender Spalt verringert werden. Spaltabdeckelemente 31 können zweckmäßig an einer Oberkante und/oder Unterkante des Basiskörpers 30 angeordnet sein.

Eine erfindungsgemäße Tragelementkonstruktion und insbesondere ein mit einer solchen gebildetes Balkongeländer 1 kann auf diese Weise mit hoher Praktikabilität und Sicherheit errichtet werden. Indem Tragelemente 6 jeweils derart miteinander formschlüssig verbindbar bzw. verbunden sind, dass diese relativ zueinander verschiebbar sind, kann eine relative Position bzw. Anordnung der Tragelemente 6 während einer Errichtung aufwandsarm geändert bzw. nachjustiert werden, sodass Ungenauigkeiten in einer Ausrichtung und/oder Positionierungsfehler zu einem späteren Zeitpunkt ausgeglichen bzw. nachjustiert werden können, vor allem ohne dadurch nachteilige mechanische Spannungen im Konstruktionsaufbau zu generieren. Dies gilt im Besonderen bei einem Balkongeländer 1, welches mit einer Vielzahl von miteinander verbundenen Tragelementen 6 gebildet ist, sodass sich kleine Fehlpositionierungen zwischen einzelnen Tragelementen 6 zu größeren Abweichungen kumulieren können. Ein Aufwand für eine einer Errichtung vorangehende organisatorische Vorplanung bzw. ein präzises Ausmessen kann dadurch massiv reduziert werden. Indem die Führungsaufnahme 8 in einer Vertiefung 14 angeordnet ist, kann zudem ein fehlerarmer und nachhaltig robuster Aufbau generiert werden. Für einen späteren Benutzer sichtbare Verbindungsmittel, wie Schrauben oder Nieten, können in hohem Maße vermieden werden, sodass sich ein sicherer und ästhetisch ansprechender Aufbau ergibt. Dies gilt besonders, wenn Abdeckelemente 18 eingesetzt sind, welche die Vertiefung 14 bzw. eine in der Vertiefung 14 angeordnete Führungsaufnahme 8 verdecken. Im Speziellen kann damit eine Tragelementkonstruktion bzw. ein damit errichtetes Balkongeländer 1 mit hoher Praktikabilität, einfacher Handhabbarkeit, hoher Sicherheit und verringertem Errichtungsaufwand errichtet und eingesetzt werden.

## Patentansprüche

1. Tragelementkonstruktion für ein Balkongeländer (1), um mehrere Tragelemente (6) des Balkongeländers (1) zur Errichtung des Balkongeländers (1) miteinander zu verbinden, wobei die Tragelementkonstruktion ein erstes Tragelement (6) des Balkongeländers, ein zweites Tragelement (6) des Balkongeländers und ein Koppelstück (7) umfasst, um das erste Tragelement (6) und das zweite Tragelement (6) mit dem Koppelstück (7) miteinander zu verbinden, wobei ein erstes Führungssystem vorhanden ist, um das erste Tragelement (6) mit dem Koppelstück (7) unter Bildung eines Formschlusses zu verbinden, und ein zweites Führungssystem vorhanden ist, um das zweite Tragelement (6) mit dem Koppelstück (7) unter Bildung eines Formschlusses zu verbinden, sodass sowohl das erste Tragelement (6) relativ zum Koppelstück (7) geführt verschiebbar ist, als auch das zweite Tragelement (6) relativ zum Koppelstück (7) geführt verschiebbar ist, um eine Relativposition des ersten Tragelementes (6) relativ zum zweiten Tragelement (6) einzustellen, wobei im jeweiligen Verschiebezustand in einer Richtung orthogonal zur jeweiligen Verschieberichtung keine formschlüssige Verbindung zwischen dem Koppelstück (7) und dem jeweiligen Tragelement (6) gegeben ist, sodass das Koppelstück (7) durch Bewegen des Koppelstückes (7) orthogonal zur jeweiligen Verschieberichtung vom jeweiligen Tragelement (6) lösbar ist, wobei das erste Führungssystem und/oder zweite Führungssystem jeweils ein erstes Führungselement, welches Teil des jeweiligen Tragelementes oder mit diesem verbunden ist, und jeweils ein zweites Führungselement, welches Teil des Koppelstückes (7) oder mit diesem verbunden ist, aufweist, wobei eines der Führungselemente mit einer Führungsaufnahme (8), die beispielsweise in Form eines Kanals oder einer Nut ausgebildet ist, und das andere Führungselement mit einem zur Führungsaufnahme (8) formkorrespondierenden Führungszapfen (9) gebildet ist, welcher Führungszapfen (9) für ein Verbinden des jeweiligen Tragelementes mit dem Koppelstück (7) unter Bildung des Formschlusses zumindest teilweise in die Führungsaufnahme (8) einfügbar ist, sodass der Führungszapfen (9) in der Führungsaufnahme (8) geführt verschiebbar ist, wobei
im Verschiebezustand in einer entgegen einer orthogonal zur Verschieberichtung ausgerichteten Einfügerichtung des Führungszapfens (9) des Koppelstückes (7) in die Führungsaufnahme (8) keine formschlüssige Verbindung zwischen dem Koppelstück (7) und dem ersten bzw. zweiten Tragelement (6) gegeben ist, sodass das Koppelstück (7) durch Bewegen des Koppelstückes (7) orthogonal zur Verschieberichtung vom jeweiligen Tragelement (6) lösbar ist, wobei das erste Führungssystem und zweite Führungssystem jeweils eine deaktivierbare Blockiervorrichtung (27), insbesondere gebildet mit einem Anschlagelement, aufweist, um ein geführtes Verschieben des Koppelstückes (7) relativ zum jeweiligen Tragelement in zumindest einer der Verschieberichtungen zu blockieren und bei deaktivierter Blockiervorrichtung (27) zu erlauben, wobei ein Herausgleiten bzw. Lösen des Führungszapfens (9) entgegen der Einfügerichtung des Führungszapfens (9) in die Führungsaufnahme (8) mit der Blockiervorrichtung (27) im anderen Tragelement durch Blockieren einer Bewegung des Koppelstückes (7) entgegen der Einfügerichtung unterbunden ist.

2. Tragelementkonstruktion nach Anspruch 1, **dadurch gekennzeichnet, dass** das erste Tragelement (6) durch das erste Führungssystem und/oder das zweite Tragelement (6) durch das zweite Führungssystem derart mit dem Koppelstück (7) formschlüssig verbindbar ist, dass das erste Tragelement (6) relativ zum Koppelstück (7) entlang einer Längsachse des ersten Tragelementes (6) geführt verschiebbar ist bzw. das zweite Tragelement (6) relativ zum Koppelstück (7) entlang einer Längsachse des zweiten Tragelementes (6) geführt verschiebbar ist.

3. Tragelementkonstruktion nach Anspruch 1 oder 2, **dadurch gekennzeichnet, dass** das erste Führungssystem und/oder zweite Führungssystem jeweils eine Arretierungsvorrichtung (10) aufweist, um eine relative Position zwischen dem ersten Tragelement (6) und dem Koppelstück (7) bzw. zwischen dem zweiten Tragelement (6) und dem Koppelstück (7) in unterschiedlichen Relativpositionen zueinander formschlüssig und/oder kraftschlüssig, insbesondere unter Bildung einer Pressverbindung, festzulegen.

4. Tragelementkonstruktion nach einem der Ansprüche 1 bis 3, **dadurch gekennzeichnet, dass** die Führungsaufnahme (8) mit einem Kanal oder einer Nut ausgebildet ist, sodass der zur Führungsaufnahme (8) korrespondierende Führungszapfen (9) in einem in die Führungsaufnahme (8) eingefügten Zustand durch den Kanal bzw. die Nut entlang des Kanals bzw. der Nut geführt verschiebbar ist.

5. Tragelementkonstruktion nach einem der Ansprüche 1 bis 4, **dadurch gekennzeichnet, dass** das Koppelstück (7) mit zwei winklig miteinander verbundenen Schenkeln gebildet ist, wobei jeweils an einem der Schenkel eines der zweiten Führungselemente angeordnet ist oder jeweils einer der Schenkel eines der zweiten Führungselemente aufweist.

6. Tragelementkonstruktion nach einem der Ansprüche 1 bis 5, **dadurch gekennzeichnet, dass** das Koppelstück (7) als Koppelstückstab ausgebildet ist, wobei die zweiten Führungselemente als Führungszapfen (9) ausgebildet sind, wobei eines der zweiten Führungselemente mit einer Längsseite des Koppelstückes (7) und das andere zweite Führungselement mit einer Breitseite des Koppelstückes (7) gebildet ist.

7. Tragelementkonstruktion nach einem der Ansprüche 1 bis 6, **dadurch gekennzeichnet, dass** das Koppelstück (7) derart ausgebildet ist, dass in einem Verschiebzustand, in welchem das erste Tragelement (6) durch das erste Führungssystem und das zweite Tragelement (6) durch das zweite Führungssystem jeweils geführt verschiebbar mit dem Koppelstück (7) verbunden ist, eine durch das erste Führungssystem vorgegebene Verschieberichtung des ersten Tragelementes (6) relativ zum Koppelstück (7) winklig, insbesondere orthogonal, zu einer durch das zweite Führungssystem vorgegebenen Verschieberichtung des zweiten Tragelementes (6) relativ zum Koppelstück (7) ist.

8. Tragelementkonstruktion nach einem der Ansprüche 1 bis 7, **dadurch gekennzeichnet, dass** die Tragelementkonstruktion mehrere zweite Tragelemente (6) aufweist, welche jeweils über ein Koppelstück (7) mit dem ersten Tragelement (6) verbindbar bzw. verbunden sind, indem jeweils zwischen dem ersten Tragelement (6) und dem Koppelstück (7) und dem zweiten Tragelement (6) und dem Koppelstück (7) ein erstes Führungssystem oder zweites Führungssystem vorgesehen ist, um die Tragelemente (6) formschlüssig mit dem Koppelstück (7) zu verbinden, sodass sowohl das erste Tragelement (6) relativ zum Koppelstück (7) geführt verschiebbar ist als auch das zweite Tragelement (6) relativ zum Koppelstück (7) geführt verschiebbar ist, um eine Relativposition des ersten Tragelementes (6) relativ zum zweiten Tragelement (6) einzustellen.

9. Tragelementkonstruktion nach Anspruch 8, **dadurch gekennzeichnet, dass** die zweiten Tragelemente (6) über dasselbe Koppelstück (7) mit dem ersten Tragelement (6) verbindbar bzw. verbunden sind.

10. Tragelementverbund, umfassend mehrere miteinander verbundene Tragelementkonstruktionen, **dadurch gekennzeichnet, dass** die Tragelementkonstruktionen nach einem der Ansprüche 1 bis 9 ausgebildet sind.

11. Geländer, insbesondere Balkongeländer (1), aufweisend mehrere miteinander verbundenen Geländertragelemente, um das Balkongeländer (1) zu bilden, **dadurch gekennzeichnet, dass** die Geländertragelemente eine Tragelementkonstruktion nach einem der Ansprüche 1 bis 9 oder einen Tragelementverbund nach Anspruch 10 bilden.

12. Verwendung einer Tragelementkonstruktion nach einem der Ansprüche 1 bis 9 oder eines Tragelementverbundes nach Anspruch 10 bei einem Balkongeländer (1), bzw. dessen Errichtung.

## Claims

1. A supporting member construction for a balcony guard rail (1) to interconnect a plurality of supporting members (6) of the balcony guard rail (1) for erecting the balcony guard rail (1), wherein the supporting member construction comprises a first supporting member (6) of the balcony guard rail, a second supporting member (6) of the balcony guard rail and a coupling piece (7) in order to interconnect the first supporting member (6) and the second supporting member (6) with the coupling piece (7), wherein a first guiding system is present in order to connect the first supporting member (6) to the coupling piece (7) forming positive engagement, and a second guiding system is present in order to connect the second supporting member (6) to the coupling piece (7) forming positive engagement, so that both the first supporting member (6) can be displaced in a guided manner relative to the coupling piece (7) and the second supporting member (6) can be displaced in a guided manner relative to the coupling piece (7) in order to configure a relative position of the first supporting member (6) relative to the second supporting member (6), wherein in the respective displacement state, there is no positive connection between the coupling piece (7) and the respective supporting member (6) in a direction orthogonal to the respective displacement direction, so the coupling piece (7) can be detached from the respective supporting member (6) by moving the coupling piece (7) orthogonally to the respective displacement direction, wherein the first guiding system and/or second guiding system has one first guide element in each case, which is part of the respective supporting member or is connected to the same, and one second guide element in each case, which is part of the coupling piece (7) or is connected to the same, wherein one of the guide elements is designed with a guide receptacle (8), which is formed for example in the form of a channel or a groove, and the other guide element is formed with a guide pin (9) corresponding to the shape of the guide receptacle (8), which guide pin (9) can be inserted at least partially into the guide receptacle (8) for connecting the respective supporting member to the coupling piece (7) forming the positive engagement, so that the guide pin (9) can be displaced in the guide receptacle (8) in a guided manner,
wherein in the displacement state, there is no positive connection between the coupling piece (7) and the first or second supporting member (6) in a direction counter to an insertion direction of the guide pin (9) of the coupling piece (7) into the guide receptacle (8), which insertion direction is aligned orthogonally to the displacement direction, so the coupling piece (7) can be detached from the respective supporting member (6) by moving the coupling piece (7) orthogonally to the displacement direction, wherein the first guiding system and second guiding system in each case has a blocking device (27), which can be deactivated and in particular is formed using a stop element, in order to block a guided displacement of the coupling piece (7) relative to the respective supporting member in at least one of the displacement directions and to enable the same if the blocking device (27) is deactivated, wherein sliding out or detachment of the guide pin (9) counter to the insertion direction of the guide pin (9) into the guide receptacle (8) is suppressed using the blocking device (27) in the other supporting member by blocking a movement of the coupling piece (7) counter to the insertion direction.

2. The supporting member construction according to Claim 1, **characterized in that**, by means of the first guiding system, the first supporting member (6) and/or, by means of the second guiding system, the second supporting member (6) can be connected in a positive manner to the coupling piece (7) such that the first supporting member (6) can be displaced in a guided manner relative to the coupling piece (7) along a longitudinal axis of the first supporting member (6) or the second supporting member (6) can be displaced in a guided manner relative to the coupling piece (7) along a longitudinal axis of the second supporting member (6).

3. The supporting member construction according to Claim 1 or 2, **characterized in that** the first guiding system and/or second guiding system in each case has a locking device (10) in order to fix a relative position between the first supporting member (6) and the coupling piece (7) or between the second supporting member (6) and the coupling piece (7) in different relative positions with respect to one another in a positive and/or non-positive manner, particularly with the formation of a press-fit connection.

4. The supporting member construction according to one of Claims 1 to 3, **characterized in that** the guide receptacle (8) is formed with a channel or a groove so that the guide pin (9) corresponding to the guide receptacle (8), in a state in which it is inserted into the guide receptacle (8), can be displaced along the channel or the groove in a manner guided by the channel or the groove.

5. The supporting member construction according to one of Claims 1 to 4, **characterized in that** the coupling piece (7) is formed with two legs which are interconnected in an angled manner, wherein in each case one of the second guide elements is arranged on one of the legs or in each case one of the legs has one of the second guide elements.

6. The supporting member construction according to one of Claims 1 to 5, **characterized in that** the coupling piece (7) is designed as a coupling-piece bar, wherein the second guide elements are designed as guide pins (9), wherein one of the second guide elements is formed with a long side of the coupling piece (7) and the other second guide element is formed with a broadside of the coupling piece (7).

7. The supporting member construction according to one of Claims 1 to 6, **characterized in that** the coupling piece (7) is designed such that, in a displacement state in which the first supporting member (6) is connected by the first guiding system and the second supporting member (6) is connected by the second guiding system, in each case in a guided displaceable manner, to the coupling piece (7), a displacement direction of the first supporting member (6) relative to the coupling piece (7), which direction is specified by the first guiding system, is angled, in particular orthogonal, with respect to a displacement direction of the second supporting member (6) relative to the coupling piece (7), which direction is specified by the second guiding system.

8. The supporting member construction according to one of Claims 1 to 7, **characterized in that** the supporting member construction has a plurality of second supporting members (6), which can be or are connected in each case by means of a coupling piece (7) to the first supporting member (6), **in that** a first guiding system or second guiding system is provided in each case between the first supporting member (6) and the coupling piece (7) and the second supporting member (6) and the coupling piece (7), in order to connect the supporting members (6) to the coupling piece (7) in a positive manner so that both the first supporting member (6) can be displaced in a guided manner relative to the coupling piece (7) and the second supporting member (6) can be displaced in a guided manner relative to the coupling piece (7) in order to configure a relative position of the first supporting member (6) relative to the second supporting member (6).

9. The supporting member construction according to Claim 8, **characterized in that** the second supporting members (6) can be or are connected to the first supporting member (6) by means of the first coupling piece (7).

10. A supporting member composite comprising a plurality of interconnected supporting member constructions, **characterized in that** the supporting member constructions are designed according to one of Claims 1 to 9.

11. A guard rail, particularly a balcony guard rail (1), having a plurality of interconnected guard-rail supporting members to form the balcony guard rail (1), **characterized in that** the guard-rail supporting members form a supporting member construction according to one of Claims 1 to 9 or a supporting member composite according to Claim 10.

12. The use of a supporting member construction according to one of Claims 1 to 9 or a supporting member composite according to Claim 10 in a balcony guard rail (1) or the erection thereof.

## Revendications

1. Structure d'éléments porteurs pour une balustrade de balcon (1), destinée à assembler les uns avec les autres plusieurs éléments porteurs (6) de la balustrade de balcon (1), pour construire la balustrade de balcon (1), la structure d'éléments porteurs comprenant un premier élément porteur (6) de la balustrade de balcon, un deuxième élément porteur (6) de la balustrade de balcon et une pièce d'accouplement (7), pour assembler l'un avec l'autre le premier élément porteur (6) et le deuxième élément porteur (6) à l'aide de la pièce d'accouplement (7), un premier système de guidage étant présent, pour assembler le premier élément porteur (6) avec la pièce d'accouplement (7), en constituant une complémentarité de forme et un deuxième système de guidage étant présent, pour assembler le deuxième élément porteur (6) avec la pièce d'accouplement (7) en constituant une complémentarité de forme, de sorte qu'aussi bien le premier élément porteur (6) soit déplaçable de manière guidée par rapport à la pièce d'accouplement (7), qu'également le deuxième élément porteur (6) soit déplaçable de manière guidée par rapport à la d'accouplement (7), pour établir une position relative du premier élément porteur (6) par rapport au deuxième élément porteur (6), dans la position de déplacement respective dans une direction orthogonale par rapport à la direction de déplacement respective, aucun assemblage par complémentarité de forme n'étant donné entre la pièce d'accouplement (7) et l'élément porteur (6) respectif, de sorte qu'en faisant bouger la pièce d'accouplement (7) à l'orthogonale de la direction de déplacement respective, la pièce d'accouplement (7) soit désolidarisable de l'élément porteur (6) respectif, le premier système de guidage et / ou le deuxième système de guidage comportant respectivement un premier élément de guidage, lequel est une partie de l'élément porteur respectif ou est assemblé avec celui-ci et respectivement un deuxième élément de guidage, lequel est une partie de la pièce d'accouplement (7) ou est assemblé avec celui-ci, l'un des éléments de guidage étant conçu avec un logement de guidage (8), qui est conçu par exemple sous la forme d'un canal ou d'une rainure et l'autre élément de guidage étant conçu avec un tenon de guidage (9) de forme correspondante avec celle du logement de guidage (8), lequel tenon de guidage (9), pour un assemblage de l'élément porteur respectif avec la pièce d'accouplement (7) en constituant la complémentarité de forme est insérable au moins en partie dans le logement de guidage (8), de sorte que le tenon de guidage (9) soit déplaçable en étant guidé dans le logement de guidage (8), en position déplacée dans une direction d'insertion orientée à l'encontre d'une direction d'insertion orientée à l'orthogonale de la direction de déplacement du tenon de guidage (9) de la pièce d'accouplement (7) dans le logement de guidage (8), aucun assemblage par complémentarité de forme n'étant donné entre la pièce d'accouplement (7) et le premier ou le deuxième élément porteur (6), de sorte qu'en faisant bouger la pièce d'accouplement (7) à l'orthogonale de la direction de déplacement, la pièce d'accouplement (7) soit désolidarisable de l'élément porteur (6) respectif, le premier système de guidage et le deuxième système de guidage comportant chacun un dispositif de blocage (27) désactivable, conçu notamment avec un élément de butée, pour bloquer un déplacement guidé de la pièce d'accouplement (7) par rapport à l'élément porteur respectif dans au moins l'une des directions de déplacement et pour le permettre lorsque le dispositif de blocage (27) est désactivé, un glissement vers l'extérieur ou une désolidarisation du tenon de guidage (9) à l'encontre de la direction d'insertion du tenon de guidage (9) dans le logement de guidage (8) étant empêché(e) par le dispositif de blocage (27) dans l'autre élément porteur par blocage d'un mouvement de la pièce d'accouplement (7) à l'encontre de la direction d'insertion.

2. Structure d'éléments porteurs selon la revendication 1, **caractérisée en ce que** le premier élément porteur (6) peut être assemblé par complémentarité de forme par le premier système de guidage et / ou le deuxième élément porteur (6) peut être assemblé par complémentarité de forme par le deuxième système de guidage avec la pièce d'accouplement (7), de telle sorte que le premier élément porteur (6) soit déplaçable en étant guidé par rapport à la pièce d'accouplement (7) le long d'un axe longitudinal du premier élément porteur (6) ou que le deuxième élément porteur (6) soit déplaçable en étant guidé par rapport à la pièce d'accouplement (7) le long d'un axe longitudinal du deuxième élément porteur (6).

3. Structure d'éléments porteurs selon la revendication 1 ou 2, **caractérisée en ce que** le premier système de guidage et / ou le deuxième système de guidage comporte respectivement un dispositif de verrouillage (10), destiné à fixer une position relative entre le premier élément porteur (6) et la pièce d'accouplement (7) ou entre le deuxième élément porteur (6) et la pièce d'accouplement (7) dans différentes positions relatives mutuelles par complémentarité de forme et / ou par complémentarité de force, notamment en constituant un assemblage par pressage.

4. Structure d'éléments porteurs selon l'une quelconque des revendications 1 à 3, **caractérisée en ce que** le logement de guidage (8) est conçu avec un canal ou une rainure, de sorte qu'en position insérée dans le logement de guidage (8), le tenon de guidage (9) correspondant au logement de guidage (8) soit déplaçable de manière guidée par le canal ou la rainure le long du canal ou de la rainure.

5. Structure d'éléments porteurs selon l'une quelconque des revendications 1 à 4, **caractérisée en ce que** la pièce d'accouplement (7) est conçue avec deux branches reliées de manière angulaire entre elles, respectivement sur l'une des branches étant placé l'un des deuxièmes éléments de guidage ou respectivement l'une des branches comportant l'un des deuxièmes éléments de guidage.

6. Structure d'éléments porteurs selon l'une quelconque des revendications 1 à 5, **caractérisée en ce que** la pièce d'accouplement (7) est conçue en tant que barre de pièce d'accouplement, les deuxièmes éléments de guidage étant conçus en tant que tenons de guidage (9), l'un des deuxièmes éléments de guidage étant conçu avec un côté largeur de la pièce d'accouplement (7) et l'autre deuxième élément de guidage étant conçu avec un côté largeur de la pièce d'accouplement (7).

7. Structure d'éléments porteurs selon l'une quelconque des revendications 1 à 6, **caractérisée en ce que** la pièce d'accouplement (7) est conçue de telle sorte que dans une position déplacée, dans laquelle le premier élément porteur (6) est assemblé en étant déplaçable de manière guidée par le premier système de guidage et le deuxième élément porteur (6) est assemblé en étant déplaçable de manière guidée par le deuxième système de guidage, respectivement avec la pièce d'accouplement (7), une direction de déplacement prédéfinie par le premier système de guidage du premier élément porteur (6) par rapport à la pièce d'accouplement (7) soit angulaire, notamment orthogonale à une direction de déplacement prédéfinie par le deuxième système de guidage du deuxième élément porteur (6) par rapport à la pièce d'accouplement (7).

8. Structure d'éléments porteurs selon l'une quelconque des revendications 1 à 7, **caractérisée en ce que** la structure d'éléments porteurs comporte plusieurs deuxièmes éléments porteurs (6), dont chacun est susceptible d'être assemblé ou est assemblé par l'intermédiaire d'une pièce d'accouplement (7) avec le premier élément porteur (6), **en ce que** chaque fois entre le premier élément porteur (6) et la pièce d'accouplement (7) et le deuxième élément porteur (6) et la pièce d'accouplement (7) est prévu un premier système de guidage ou un deuxième système de guidage, pour assembler les éléments porteurs (6) par complémentarité de forme avec la pièce d'accouplement (7), de sorte qu'aussi bien le premier élément porteur (6) soit déplaçable en étant guidé par rapport à la pièce d'accouplement (7) qu'également le deuxième élément porteur (6) soit déplaçable en étant guidé par rapport à la pièce d'accouplement (7), pour établir une position relative du premier élément porteur (6) par rapport au deuxième élément porteur (6).

9. Structure d'éléments porteurs selon la revendication 8, **caractérisée en ce que** les deuxièmes éléments porteurs (6) sont susceptibles d'être assemblés ou sont assemblés par l'intermédiaire de la même pièce d'accouplement (7) avec le premier élément porteur (6).

10. Ensemble d'éléments porteurs, comprenant plusieurs structures d'éléments porteurs assemblées les unes avec les autres, **caractérisé en ce que** les structures d'éléments porteurs sont conçues selon l'une quelconque des revendications 1 à 9.

11. Balustrade, notamment balustrade de balcon (1), comportant plusieurs éléments porteurs de balustrade assemblés les uns avec les autres pour constituer la balustrade de balcon (1), **caractérisée en ce que** les éléments porteurs de balustrade constituent une structure d'éléments porteurs selon l'une quelconque des revendications 1 à 9 ou un ensemble d'éléments porteurs selon la revendication 10.

12. Utilisation d'une structure d'éléments porteurs selon l'une quelconque des revendications 1 à 9 ou d'un ensemble d'éléments porteurs selon la revendication 10 sur une balustrade de balcon (1) ou lors de sa construction.
